# EUROPEAN PATENT SPECIFICATION

(11) **EP 3 748 902 B1**
(45) Date of publication and mention of the grant of the patent: **20.05.2026**
(21) Application number: 19759944.2
(22) Date of filing: 22.02.2019
(51) Int. Cl.: H04L 9/32, H04L 9/08

(54) **MANAGEMENT METHOD, TERMINAL AND SERVER**
VERWALTUNGSVERFAHREN, ENDGERÄT UND SERVER
PROCÉDÉ DE GESTION, TERMINAL ET SERVEUR

(30) Priority: 28.02.2018 CN 201810167314
(43) Date of publication of application: 09.12.2020
(73) Proprietor: HUAWEI TECHNOLOGIES CO., LTD., Shenzhen, Guangdong 518129 (CN)
(72) Inventor: WANG, Sishan, Shenzhen, Guangdong 518129 (CN); CHANG, Xinmiao, Shenzhen, Guangdong 518129 (CN)
(74) Representative: Grünecker Patent- und Rechtsanwälte PartG mbB
(86) International application number: PCT/CN2019/075765
(87) International publication number: WO 2019/165931

(56) References cited:
- CN-A- 101 770 794
- CN-A- 104 468 111
- CN-A- 105 340 236
- CN-A- 106 936 774
- US-A1- 2009 210 703
- US-A1- 2015 052 359
- PEI SYMANTEC N COOK INTERCEDE M YOO SOLACIA A ATYEO INTERCEDE H TSCHOFENIG ARM LTD M: "The Open Trust Protocol (OTrP); draft-pei-opentrustprotocol-02.txt", THE OPEN TRUST PROTOCOL (OTRP); DRAFT-PEI-OPENTRUSTPROTOCOL-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 5 January 2017 (2017-01-05), pages 1 - 109, XP015117274
- GLOBALPLATFORM: "The Trusted Execution Environment: Delivering Enhanced Security at a Lower Cost to the Mobile Market", WHITE PAPER, 1 June 2015 (2015-06-01), XP055463655, Retrieved from the Internet <URL:https://www.globalplatform.org/documents/whitepapers/GlobalPlatform_TEE_Whitepaper_2015.pdf> [retrieved on 20180328]
- H�LZL MICHAEL ET AL: "Extensibility in a Privacy-preserving eID: Towards a Mobile eID System for Real-world Identification and Offline Verification", IFIP SUMMER SCHOOL 2017: PRIVACY AND IDENTITY MANAGEMENT -- THE SMART WORLD REVOLUTION, 8 September 2017 (2017-09-08), Ispra, Italy, pages 1 - 16, XP055772516, Retrieved from the Internet <URL:https://www.mroland.at/uploads/2017/09/Hoelzl_2017_IFIPSC17PP_PrivacyPreservingEID.pdf> [retrieved on 20210204]

## Description

### TECHNICAL FIELD

The present invention relates to the data security field, and in particular, to a management method, a terminal, and a server.

### BACKGROUND

With development of electronic products and a requirement of a user for data security, currently, with support of hardware, many terminals may simultaneously have two execution environments. One execution environment is a common execution environment, or is referred to as a rich execution environment (rich execution environment, REE). The common execution environment is usually a running environment that does not have a specific security function. The other execution environment is a trusted execution environment (trust execution environment, TEE). The TEE has a security function, meets a specific security requirement, and can implement a running mechanism in which the TEE is isolated from the REE. The TEE runs independently of the REE and defines strict security protection measures. The TEE has a higher security level than the REE, can protect resources (assets) (such as data and software) in the trusted execution environment from general software attacks (general software attacks), and resists a specific type of security threat. Only an authorized trusted application (trusted application, TA) can be executed in the TEE. Therefore, confidentiality of resources and data of security software is protected. The TEE provides better protection of resource and data security than the REE because of protection mechanisms such as TEE isolation and permission control.

An open trust protocol (open trust protocol, OTrP) provides a set of public key infrastructure PKI-based remote management mechanisms that are open, secure, and reliable for the TEE. When an outside world entity (outside world entity, OWE) performs remote management on the TEE, for example, performs a privileged operation (privileged operations) such as creating a security domain (security domain, SD), or installing a trusted application, authentication (Authentication) and authorization (Authorization) verification need to be performed according to a PKI mechanism. For example, when generating a management instruction, the OWE signs a management instruction by using an OWE private key, and performs encryption by using a TEE public key obtained from a TEE certificate (a digital envelope mechanism is used for encryption, content is signed and encrypted according to a JSON Web Signature/JSON Web Encryption mechanism specified in RFC 7516-7518, and a content encryption key (content encryption key, CEK) is encrypted by using the TEE public key). Then, the information is sent to the TEE. After receiving the information, the TEE verifies an OWE certificate (chain) by using a trusted root certificate, to ensure that the management instruction is sent by an authorized OWE. Then, a TEE private key is used to decrypt an encapsulated CEK, encrypted data in the management instruction is decrypted by using the CEK, and then the management instruction is executed. In the OTrP mechanism, before sending the management instruction, the OWE needs to perform authentication on the TEE and encrypt the CEK of the JWE by using the TEE public key. In other words, real-time interaction or communication, namely, online communication, between the OWE and the TEE needs to be performed when the TEE is managed by using the OTrP.

US 2015/0052359 A1 relates to a method to securely and asynchronously provisioning keys from one source secure device to a target secure device through a key provisioning server for which the keys to be provisioned through the method remain unknown.

### SUMMARY

The present invention provides a management method, a terminal, and a server, to implement offline management of a TEE in an OTrP.

According to a first aspect, a management method is provided, and is applied to management of a trusted execution environment TEE that supports an open trust protocol OTrP. The management method includes:
obtaining, by a terminal, an application packet, where the application packet includes an offline management instruction, the offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE;
determining, by the terminal, whether a target SD corresponding to the target SD identifier includes the decryption key corresponding to the decryption key identifier; and
when the target SD includes the decryption key, decrypting, by the terminal, the encrypted data by using the decryption key, and performing an offline management operation based on data obtained after the encrypted data is decrypted; wherein the encrypted data comprise a trusted application,TA, installation package or a TA update package. The provided management method is used to implement offline management of the TEE in the OTrP.

With reference to the first aspect, in a first possible implementation, the management method further includes:
when the target SD does not include the decryption key, sending, by the terminal, a first message to the OWE, where the first message includes the decryption key identifier, and is used to obtain the decryption key corresponding to the decryption key identifier;
receiving, by the terminal, a second message sent by the OWE in an online management mode by using the OTrP, where the second message includes the decryption key; and
storing, by the terminal, the decryption key in a target SD of a TEE module; and
decrypting, by the terminal, the encrypted data by using the decryption key, and performing an offline management operation based on data obtained after the encrypted data is decrypted.

With reference to the first aspect or the first possible implementation of the first aspect, in a second possible implementation of the first aspect, before the determining, by the terminal, whether a target SD corresponding to the target SD identifier includes the decryption key corresponding to the decryption key identifier, the management method further includes:

The terminal determines, based on the target SD identifier, whether the TEE module of the terminal includes the target SD corresponding to the target SD identifier.

With reference to the second possible implementation of the first aspect, in a third possible implementation of the first aspect, the management method further includes:
when the TEE module of the terminal does not include the target SD corresponding to the target SD identifier, sending, by the terminal, a third message to the OWE, where the third message includes instruction information, the third message is used to request to install the target SD corresponding to the target SD identifier, and the instruction information is used to instruct to deploy, in the target SD that is requested to be installed, the decryption key corresponding to the decryption key identifier;
receiving, by the terminal, a fourth message sent by the OWE in the online management mode by using the OTrP, where the fourth message includes a target SD installation instruction, and the target SD installation instruction includes the decryption key; and
installing, by the terminal according to the target SD installation instruction, the target SD corresponding to the target SD identifier, and storing the decryption key in a TEE module of the installed target SD.

With reference to the third possible implementation of the first aspect, in a fourth possible implementation of the first aspect, the first message and the third message each include the decryption key identifier carried in the offline management instruction or an identifier of the offline management instruction, and the target SD installation instruction includes the decryption key corresponding to the decryption key identifier.

With reference to any one of the first to the fourth possible implementations of the first aspect, in a fifth possible implementation of the first aspect, the second message and the fourth message each further include an attribute parameter of the decryption key, and the management method further includes:
updating, by the terminal, association information based on the attribute parameter, where updated association information includes a correspondence between the target SD and the decryption key.

With reference to any one of the first aspect, or the first to the fifth possible implementations of the first aspect, in a sixth possible implementation of the first aspect, the offline management instruction further includes application information, and after the obtaining, by a terminal, an application packet, the management method further includes:
determining, by the terminal based on the application information and TEE information, whether the offline management instruction needs to be executed, where the TEE information is application information corresponding to an application installed in the TEE module of the terminal.

With reference to any one of the first aspect, or the first to the sixth possible implementations of the first aspect, in a seventh possible implementation of the first aspect, the offline management instruction further includes a key calculation parameter, and the decrypting, by the terminal, the encrypted data by using the decryption key includes:
calculating, by the terminal, a session key by using the decryption key corresponding to the decryption key identifier and the key calculation parameter, and decrypting the encrypted data by using the session key.

With reference to any one of the first aspect, or the first to the seventh possible implementations of the first aspect, in an eighth possible implementation of the first aspect, before the obtaining, by a terminal, an application packet, the management method further includes:
sending, by the terminal, a fifth message to the OWE, where the fifth message is used by the OWE to configure a decryption key for at least one SD in the terminal;
receiving, by the terminal, a sixth message sent by the OWE in the online management mode by using the OTrP, where the sixth message includes at least one decryption key and an attribute parameter of the decryption key; and
storing, by the terminal, the at least one decryption key, and generating association information based on the attribute parameter of the decryption key, where the association information includes one or two of the following manners: there is a one-to-one correspondence between the at least one decryption key and the at least one SD, or there is a correspondence between each of the at least one decryption key and a plurality of SDs in the at least one SD.

According to a second non-claimed exemplary aspect, a management method is provided, and is applied to management of a trusted execution environment TEE that supports an open trust protocol OTrP. The management method may include:
generating, by an outside world entity OWE, an offline management instruction, where the offline management instruction includes a target security domain SD identifier, a decryption key identifier, and encrypted data, a decryption key corresponding to the decryption key identifier is used to decrypt the encrypted data, the encrypted data is generated by the OWE by using an encryption key, the decryption key and the encryption key are a key pair generated by the OWE, and when a terminal obtains an application packet including the offline management instruction, the offline management instruction is used by the terminal to decrypt the encrypted data by using the decryption key corresponding to the decryption key identifier, and to perform an offline management operation based on data obtained after encrypted data is decrypted. The provided management method is used to implement offline management of the TEE in the OTrP.

With reference to the second aspect, in a first possible implementation of the second aspect, the management method further includes:
receiving, by the OWE, a first message sent by the terminal, where the first message includes the decryption key identifier, and is used by the terminal to obtain the decryption key corresponding to the decryption key identifier; and
performing, by the OWE, bidirectional authentication with a TEE of the terminal in an online management mode by using the OTrP, and sending, by the OWE, a second message to the terminal after authentication succeeds, where the second message includes the decryption key, the second message is used by the terminal to store the decryption key in a target SD of a TEE module and update association information, and the association information includes a correspondence between the target SD and the decryption key.

With reference to the second aspect or the first possible implementation of the second aspect, in a second possible implementation of the second aspect, the management method further includes:
receiving, by the OWE, a third message sent by the terminal, where the third message includes instruction information, the third message is used to request to install a target SD corresponding to the target SD identifier, and the instruction information is used to instruct to deploy, in the target SD that is requested to be installed, the decryption key corresponding to the decryption key identifier; and
performing, by the OWE, bidirectional authentication with a TEE of the terminal in an online management mode by using the OTrP, and sending, by the OWE, a fourth message to the terminal after authentication succeeds, where the fourth message includes a target SD installation instruction, the target SD installation instruction includes the decryption key, the fourth message is used by the terminal to install the target SD, store the decryption key in a TEE module of the installed target SD, and update association information, and the association information includes a correspondence between the target SD and the decryption key.

With reference to the second possible implementation of the second aspect, in a third possible implementation of the second aspect, the first message and the third message each include the decryption key identifier carried in the offline management instruction or an identifier of the offline management instruction, and the target SD installation instruction includes the decryption key corresponding to the decryption key identifier.

With reference to any one of the second aspect, or the first to the third possible implementations of the second aspect, in a fourth possible implementation of the second aspect, the management method further includes:
receiving, by the OWE, a fifth message sent by the terminal, where the fifth message is used by the OWE to configure a decryption key for at least one SD in the terminal;
performing, by the OWE, bidirectional authentication with the terminal, and after authentication succeeds, sending, by the OWE, a sixth message to the terminal, where the sixth message includes at least one decryption key and an attribute parameter of the decryption key, the sixth message is used by the terminal to store the at least one decryption key and generate association information based on the attribute parameter of the decryption key, and the association information includes one or two of the following manners: there is a one-to-one correspondence between the at least one decryption key and the at least one SD, or there is a correspondence between each of the at least one decryption key and a plurality of SDs in the at least one SD.

With reference to any one of the second aspect, or the first to the fourth possible implementations of the second aspect, in a fifth possible implementation of the second aspect, the generating, by an outside world entity OWE, an offline management instruction includes:
encrypting, by the OWE, data by using the generated encryption key to obtain the encrypted data, and packaging the encrypted data and the decryption key identifier to generate the offline management instruction; or
generating, by the OWE, a session key by using the generated encryption key and a key calculation parameter, encrypting data by using the session key to obtain the encrypted data, and adding the key calculation parameter, the encrypted data, and the decryption key identifier to the offline management instruction.

According to a third non-claimed exemplary aspect, a management method is provided, and is applied to management of a trusted execution environment TEE that supports an open trust protocol OTrP. The management method may include:
receiving, by a TEE module, an offline management instruction sent by a rich execution environment REE module of a terminal, where the offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE;
determining, by the TEE module, whether a target SD corresponding to the target SD identifier includes the decryption key corresponding to the decryption key identifier; and
when the target SD includes the decryption key, decrypting, by the TEE module, the encrypted data by using the decryption key, and performing an offline management operation based on data obtained after the encrypted data is decrypted. The provided management method is used to implement offline management of the TEE in the OTrP.

With reference to the third aspect, in a first possible implementation of the third aspect, the management method further includes:
when the target SD does not include the decryption key, sending, by the TEE module, a first message to the OWE by using the REE module, where the first message includes the decryption key identifier, and is used to obtain the decryption key corresponding to the decryption key identifier;
receiving, by the TEE module by using the REE module, a second message sent by the OWE in an online management mode by using the OTrP, where the second message includes the decryption key; and
storing, by the TEE module, the decryption key in a target SD; and
decrypting, by the TEE module, the encrypted data by using the decryption key, and performing an offline management operation based on data obtained after the encrypted data is decrypted.

With reference to the third aspect or the first possible implementation of the third aspect, in a second possible implementation of the third aspect, before the determining, by the TEE module, whether a target SD corresponding to the target SD identifier includes the decryption key corresponding to the decryption key identifier, the management method further includes:
determining, by the TEE module based on the target SD identifier, whether the TEE module includes the target SD corresponding to the target SD identifier.

With reference to the second possible implementation of the third aspect, in a third possible implementation of the third aspect, the management method further includes:
when the TEE module does not include the target SD corresponding to the target SD identifier, sending, by the TEE module by using the REE module, a third message to the OWE, where the third message includes instruction information, the third message is used to request to install the target SD corresponding to the target SD identifier, and the instruction information is used to instruct to deploy, in the target SD that is requested to be installed, the decryption key corresponding to the decryption key identifier;
receiving, by the TEE module, a fourth message sent by the OWE in the online management mode by using the OTrP, where the fourth message includes a target SD installation instruction, and the target SD installation instruction includes the decryption key; and
installing, by the TEE module according to the target SD installation instruction, the target SD corresponding to the target SD identifier, and storing the decryption key in the installed target SD.

With reference to the third possible implementation of the third aspect, in a fourth possible implementation of the third aspect, the first message and the third message each include the decryption key identifier carried in the offline management instruction or an identifier of the offline management instruction, and the target SD installation instruction includes the decryption key corresponding to the decryption key identifier.

With reference to any one of the first to the fourth possible implementations of the third aspect, in a fifth possible implementation of the third aspect, the second message and the fourth message each further include an attribute parameter of the decryption key, and the management method further includes:
updating, by the TEE module, association information based on the attribute parameter, where updated association information includes a correspondence between the target SD and the decryption key.

With reference to any one of the third aspect, or the first to the fifth possible implementations of the third aspect, in a sixth possible implementation of the third aspect, the offline management instruction further includes application information, and after the receiving, by a TEE module, an offline management instruction sent by a rich execution environment REE module of a terminal, the management method further includes:
determining, by the TEE module based on the application information and TEE information, whether the offline management instruction needs to be executed, where the TEE information is application information corresponding to an application installed in the TEE module of the terminal.

With reference to any one of the third aspect, or the first to the sixth possible implementations of the third aspect, in a seventh possible implementation of the third aspect, the offline management instruction further includes a key calculation parameter, and the decrypting, by the TEE module, the encrypted data by using the decryption key includes:
calculating, by the TEE module, a session key by using the decryption key corresponding to the decryption key identifier and the key calculation parameter, and decrypting the encrypted data by using the session key.

With reference to any one of the third aspect, or the first to the seventh possible implementations of the third aspect, in an eighth possible implementation of the third aspect, before the receiving, by a TEE module, an offline management instruction sent by a rich execution environment REE module of a terminal, the management method further includes:
sending, by the TEE module, a fifth message to the OWE by using the REE module, where the fifth message is used by the OWE to configure a decryption key for at least one SD in the terminal;
receiving, by the TEE module by using the REE module, a sixth message sent by the OWE in the online management mode by using the OTrP, where the sixth message includes at least one decryption key and an attribute parameter of the decryption key; and
storing, by the TEE module, the at least one decryption key, and generating association information based on the attribute parameter of the decryption key, where the association information includes one or two of the following manners: there is a one-to-one correspondence between the at least one decryption key and the at least one SD, or there is a correspondence between each of the at least one decryption key and a plurality of SDs in the at least one SD.

According to a fourth aspect, a terminal is provided, and is applied to management of a trusted execution environment TEE that supports an open trust protocol OTrP. The terminal includes:
an obtaining unit, configured to obtain an application packet, where the application packet includes an offline management instruction, the offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE; and
a processing unit, configured to determine whether a target SD corresponding to the target SD identifier includes the decryption key corresponding to the decryption key identifier, where
when the target SD includes the decryption key, the processing unit decrypts the encrypted data by using the decryption key, and performs an offline management operation based on data obtained after the encrypted data is decrypted; wherein the encrypted data comprise a trusted application,TA, installation package or a TA update package. The provided management method is used to implement offline management of the TEE in the OTrP.

According to a fifth non-claimed exemplary aspect, a server is provided, and is applied to management of a trusted execution environment TEE that supports an open trust protocol OTrP. The server includes:
a processing unit, configured to generate an offline management instruction, where the offline management instruction includes a target security domain SD identifier, a decryption key identifier, and encrypted data, a decryption key corresponding to the decryption key identifier is used to decrypt the encrypted data, the encrypted data is generated by the OWE by using an encryption key, the decryption key and the encryption key are a key pair generated by the OWE, and when a terminal obtains an application packet including the offline management instruction, the offline management instruction is used by the terminal to decrypt the encrypted data by using the decryption key corresponding to the decryption key identifier, and to perform an offline management operation based on data obtained after encrypted data is decrypted. The provided management method is used to implement offline management of the TEE in the OTrP.

According to a sixth non-claimed exemplary aspect, a terminal is provided, and is applied to management of a trusted execution environment TEE that supports an open trust protocol OTrP. The terminal includes a TEE module and a rich execution environment REE module, and the TEE module includes:
a receiving unit, configured to receive an offline management instruction sent by the REE module, where the offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE; and
a processing unit, configured to determine whether a target SD corresponding to the target SD identifier includes the decryption key corresponding to the decryption key identifier, where
when the target SD includes the decryption key, the processing unit is further configured to: decrypt the encrypted data by using the decryption key, and perform an offline management operation based on data obtained after the encrypted data is decrypted. The provided management method is used to implement offline management of the TEE in the OTrP.

According to a seventh non-claimed exemplary aspect, a terminal is provided. The terminal includes a receiver, a transmitter, a processor, and a memory. The receiver, the transmitter, the processor, and the memory are connected to each other, and are configured to complete mutual communication. The terminal may complete the management methods according to any one of the first aspect or the possible implementations of the first aspect and any one of the third aspect or the possible implementations of the third aspect.

According to an eighth non-claimed exemplary aspect, a server is provided. The server includes a transceiver, a processor, and a memory. The transceiver, the processor, and the memory are connected to each other, and are configured to complete mutual communication. The server may complete the management method according to any one of the second aspect or the possible implementations of the second aspect.

According to a ninth aspect, a computer readable medium according to claim 15 is provided, and includes an instruction. When the instruction is run on a device, the device is enabled to perform the method according to the first aspect and the possible implementations of the first aspect.

According to a tenth non-claimed exemplary aspect, a computer program product or a computer program including an instruction is provided. When the computer program product or the computer program is run on a computer, the computer is enabled to perform the method according to any one of the first to the third aspects and the possible implementations of the first to the third aspects.

According to an eleventh non-claimed exemplary aspect, a communications apparatus is provided, and may be, for example, a chip. The communications apparatus may be disposed in a terminal device. The communications apparatus includes a processor and an interface. The processor may be configured to support the communications apparatus in performing the method according to any one of the possible implementations of the first to the third aspects. The interface is configured to support communication between the communications apparatus and another communications apparatus or another network element. The communications apparatus may further include a memory. The memory is configured to be coupled to the processor, and the memory stores a program instruction and data that are necessary to the communications apparatus.

According to a twelfth non-claimed exemplary aspect, a system is provided. The system includes the terminal according to the fourth aspect or the sixth aspect and the server according to the fifth aspect, or the system includes the terminal according to the seventh aspect and the server according to the eighth aspect.

According to the provided management method, terminal, and server, the OWE preconfigures the decryption key in the target SD of the terminal. After the offline management instruction is received, the encrypted data in the offline management instruction is decrypted by using the decryption key, and offline management is performed based on the data obtained after the encrypted data is decrypted. Therefore, offline management of the TEE in the OTrP is implemented.

### BRIEF DESCRIPTION OF DRAWINGS

FIG. 1 is a schematic diagram of an internal structure of a TEE that supports an OTrP according to an embodiment of the present invention;
FIG. 2 is a schematic diagram in which a TEE stores a decryption key and association information of an SD according to an embodiment of the present invention;
FIG. 3 is another schematic diagram in which a TEE stores a decryption key and association information of an SD according to an embodiment of the present invention;
FIG. 4 is a schematic diagram of two offline management instruction obtaining manners according to an embodiment of the present invention;
FIG. 5 is a schematic flowchart of mutual authentication between an OWE and a TEE according to an embodiment of the present invention;
FIG. 6 is a schematic flowchart of a management method according to an embodiment of the present invention;
FIG. 7 is a schematic flowchart of installing a target SD online according to an embodiment of the present invention;
FIG. 8 is another schematic flowchart of obtaining a decryption key online according to an embodiment of the present invention;
FIG. 9A to FIG. 9C are a schematic flowchart of another management method according to an embodiment of the present invention;
FIG. 10(a)-1, FIG. 10(a)-2, FIG. 10(b)-1, and FIG. 10(b)-2 are schematic flowcharts of still another management method according to an embodiment of the present invention;

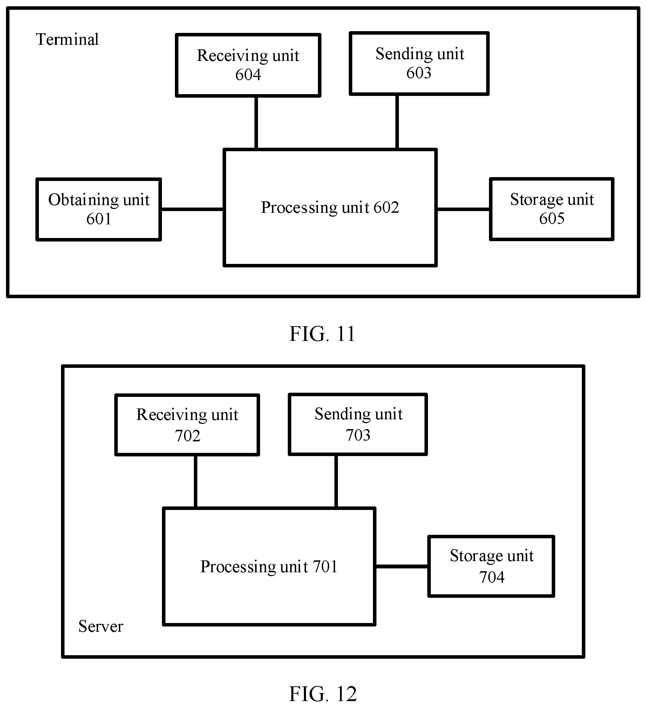

FIG. 11 is a schematic structural diagram of a terminal according to an embodiment of the present invention;
FIG. 12 is a schematic structural diagram of a server according to an embodiment of the present invention;

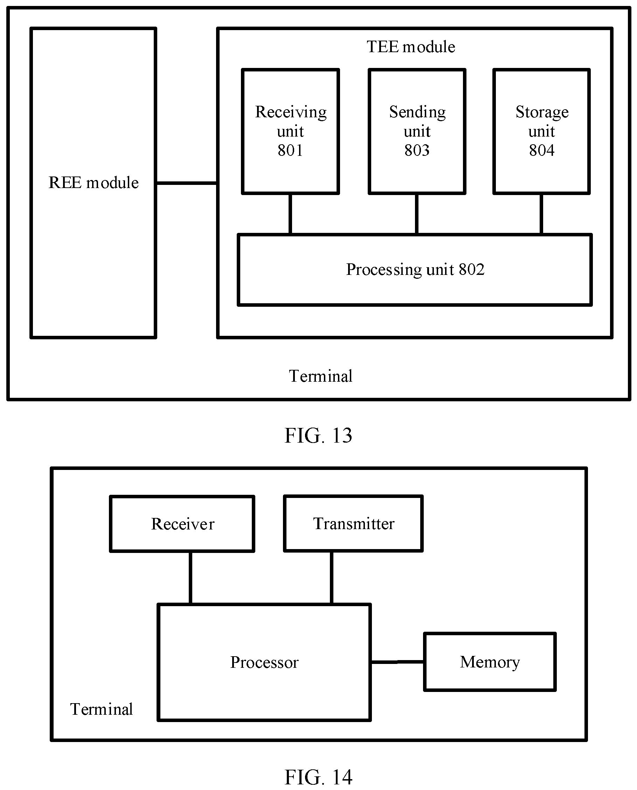

FIG. 13 is a schematic structural diagram of another terminal according to an embodiment of the present invention;
FIG. 14 is a schematic structural diagram of still another terminal according to an embodiment of the present invention;

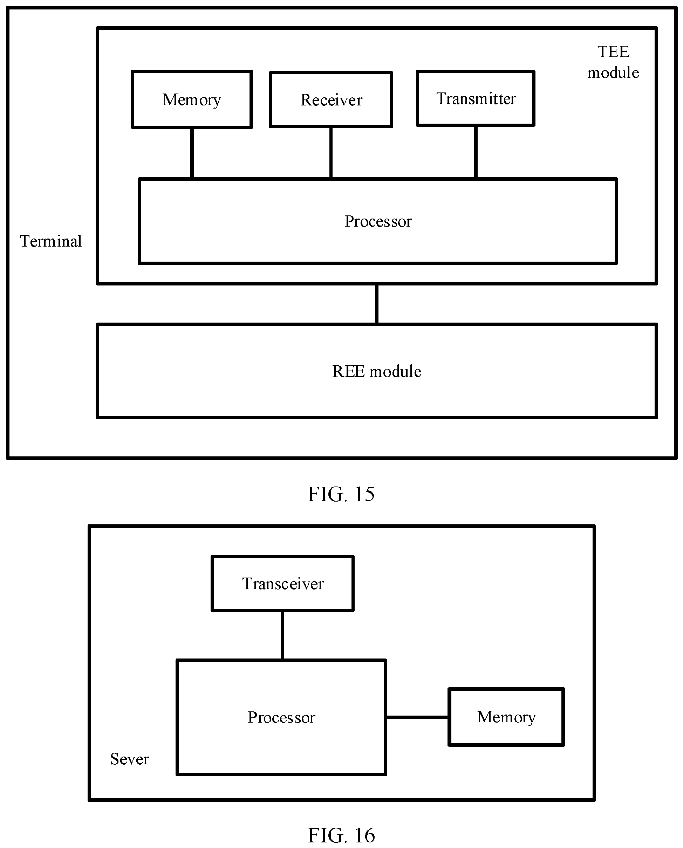

FIG. 15 is a schematic structural diagram of yet another terminal according to an embodiment of the present invention;
FIG. 16 is a schematic structural diagram of another server according to an embodiment of the present invention; and

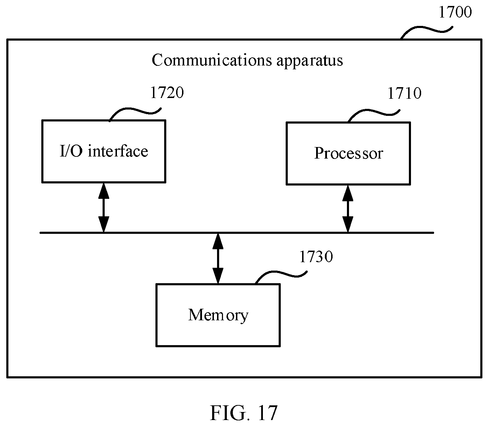

FIG. 17 is a schematic diagram of a communications apparatus according to an embodiment of the present invention.

### DESCRIPTION OF EMBODIMENTS

First, several concepts mentioned in embodiments of the present invention are described.

To ensure security of a TEE, the TEE performs a corresponding management operation only after the TEE performs authentication (Authentication) and authorization (Authorization) verification on various management instructions of an OWE, for example, creating an SD and installing a TA. This process is usually performed according to a cryptographic mechanism. An OTrP is a public key infrastructure (Public Key Infrastructure, PKI)-based trust architecture, and provides an open and highly interoperable protocol to manage an SD/a TA in the TEE.

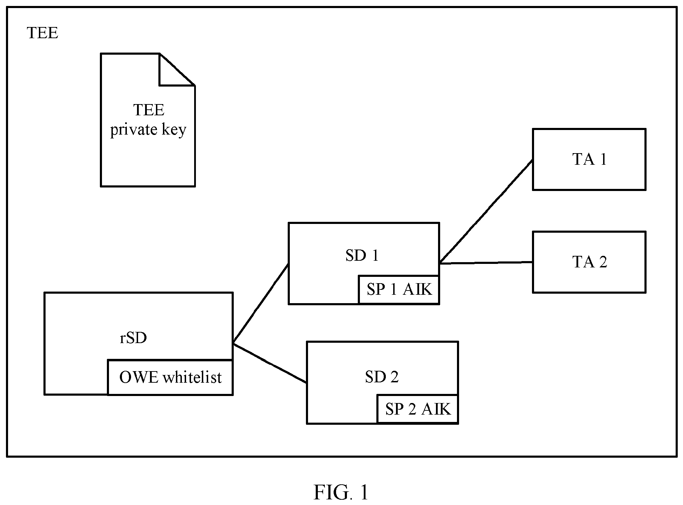

In the OTrP, as shown in FIG. 1, each root security domain rSD in a TEE of a terminal stores one OWE whitelist (Whitelist), and the whitelist includes at least one root certificate of a trusted certificate authority (Certificate Authority) of the TEE (an original equipment manufacturer (Original Equipment Manufacture, OEM)/TEE manufacturer. The root certificate can be used to authenticate authenticity of an OWE certificate (chain), to ensure that only OWE that legally holds a certificate issued by the certificate authority can initiate remote management on a TEE for which the root certificate of the trusted CA is preconfigured. In the OTrP, authentication and authorization verification are a process in which the TEE verifies an OWE signature and a certificate chain by using the OWE whitelist.

In the OTrP, the OWE is an entity having a TEE management function, and is usually a trusted service management server (Trusted Service Manager, TSM). In the OTrP, a service provider SP manages a TA of the SP by entrusting an OWE. Depending on a management mode selected by the OWE, the OWE creates one or more SDs in the rSD to manage the TA of the SP, and the TEE records an association relationship between the OWE and the SD/TA created by the OWE. In addition, it is ensured that the OWE can manage only the SD/TA installed by OWE.

On a basis of managing the TEE based on the OTrP, the embodiments of the present invention provide a management method, a terminal, and a server. In the offline management method, when constructing an offline management instruction, an OWE first performs authentication and authorization verification on the TEE based on a PKI or according to a signature mechanism in another manner, and then encrypts and decrypts the offline management instruction according to a management mechanism described in this embodiment of the present invention. It should be noted that, in the embodiments of the present invention, a process of performing authentication and authorization verification on the TEE based on a PKI or according to a signature mechanism in another manner is not a focus, and is not described in detail in the embodiments of the present invention.

It should be further noted that, in the embodiments of the present invention, a process in which the OWE deploys a decryption key for an SD in the TEE may also be referred to as a process in which the OWE configures the decryption key for the SD in the TEE. In the embodiments of the present invention, "deploy" and "configure" mentioned express a same meaning.

Before the management method is used, a root security domain (root security domain, rSD) in the TEE further needs to store a root certificate list used to verify an OWE certificate (chain), to perform authentication and authorization verification on the OWE in an online mode and an offline mode. This ensures that validity of the OWE can be verified in online or offline scenarios.

In addition, a TEE of the terminal has a capability of processing an offline management instruction sent by an REE, and can determine, based on the offline management instruction and an attribute (property) of the SD, whether a target SD has a capability of parsing encrypted data in the offline management instruction (collectively referred to as "whether the SD has an offline management function" below). The TEE executes different processing logic based on a determining result.

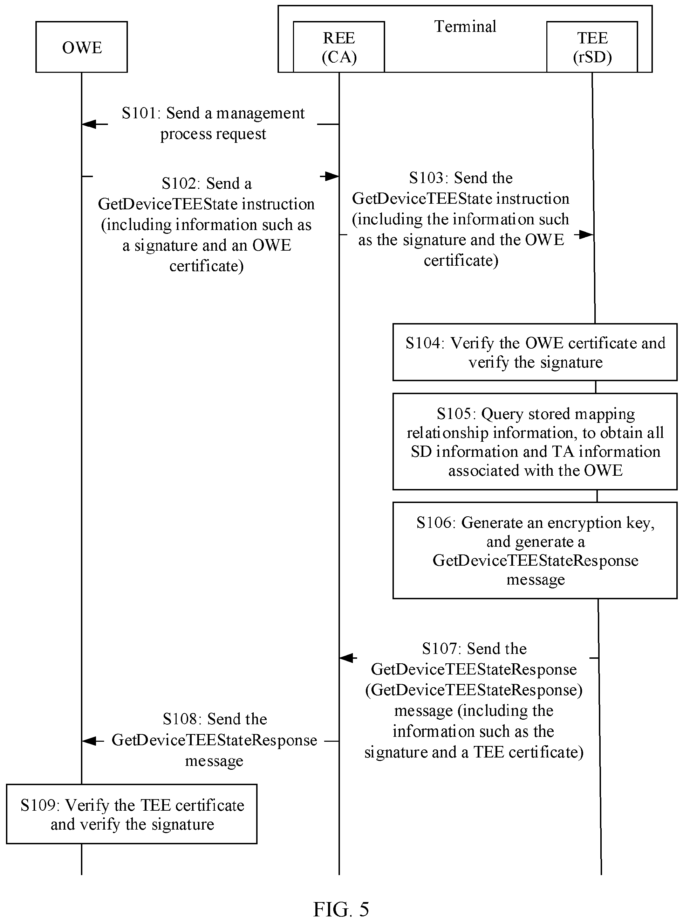

When the TEE determines that the SD does not have the offline management function, the terminal may apply to the OWE for activating the offline management function of the SD, to be specific, initiate, to the OWE, activation of a capability of the SD to decrypt the offline management instruction. Then, the OWE completes bidirectional authentication with the TEE by using an online management process (a GetDeviceTEEState request and response) in the OTrP. For specific descriptions, refer to FIG. 5. After bidirectional authentication is completed, the OWE creates an SD instruction or update (update) an SD instruction, to deploy (deploy) a decryption key in a target SD included in the TEE, so as to activate the offline management function of the target SD. After the TEE of the terminal receives the offline management instruction for the target SD and successfully performs authentication on the OWE, the TEE of the terminal decrypts, by using the decryption key, encrypted data that is in the offline management instruction and that is obtained after encryption performed by using an encryption key, and then performs an offline management operation based on data obtained after the encrypted data is decrypted. In the embodiments of the present invention, the offline management operation includes but is not limited to installing a trusted application (Trusted Application, TA), updating a TA, and deleting a TA.

For example, the offline management instruction is an offline TAinstallation instruction. In this case, the offline management instruction may include offline authentication information such as TA installation information, encrypted TA data (TA binary), a signature, and a certificate chain. The TA installation information may include a target SD identifier corresponding to the target SD and the decryption key identifier. Optionally, in one embodiment of the present invention, the TA installation information may further include basic information such as a TA identifier and a version number.

In the embodiments of the present invention, the encryption key of the encrypted data and the decryption key deployed in the SD are a key pair (the encryption key Key_enc and the decryption key Key_dek) generated by the OWE according to an algorithm of the OWE. In an embodiment of the present invention, the encryption key is used to encrypt to-be-encrypted data, to generate the offline management instruction. The decryption key is deployed by the OWE in the SD in the TEE. In another embodiment of the present invention, the OWE generates a session key by using the encryption key and a key calculation parameter, and encrypts the to-be-encrypted data by using the session key. When the OWE generates an offline management instruction, the offline management instruction needs to include a key calculation parameter, so that after receiving the offline management instruction subsequently, the TEE calculates the session key by using the decryption key and the key calculation parameter, and decrypts the encrypted data in the offline management instruction. Two encryption modes are described herein by using an example. In the embodiments of the present invention, more encryption modes may be used to implement the technical solutions in the embodiments of the present invention.

In another embodiment of the present invention, if the to-be-encrypted data in the offline management instruction includes encrypted data, for example, the to-be-encrypted data includes TA data (TA binary) that has been encrypted once, the to-be-encrypted data needs to carry, according to an encryption mode of the encrypted TA data, decryption key information used to decrypt the encrypted TA data and a corresponding key calculation parameter. The OWE then encrypts the to-be-encrypted data in the foregoing two encryption modes or in another manner, generates encrypted data in the offline management instruction, and adds, to the offline management instruction, a decryption key identifier used to decrypt the encrypted data and a possible key calculation parameter. When decrypting the encrypted data, the terminal first decrypts the encrypted data by using a decryption key corresponding to the decryption key identifier in the offline management instruction, then obtains, from decrypted data, a related key and a key calculation parameter that are used to decrypt data obtained after encryption performed for two times and decrypts the data obtained after encryption performed for two times.

It should be noted that, in technical solutions of the embodiments of the present invention, generating the offline management instruction by using the encryption key and deploying the decryption key in the SD of the TEE by the OWE are two processes that do not interfere with each other.

The OWE may generate the offline management instruction before the terminal obtains offline management from an application management server, and place the offline management instruction in the application management server. The OWE may deploy the decryption key in the SD in the following cases: 1. The OWE preconfigures the decryption key in the SD before the TEE receives the offline management instruction. After the TEE receives the offline management instruction, the TEE may directly decrypt the encrypted data in the offline management instruction based on the decryption key included in the SD. 2. After receiving the offline management instruction, the TEE obtains the decryption key online from the OWE, and then decrypts the encrypted data in the offline management instruction.

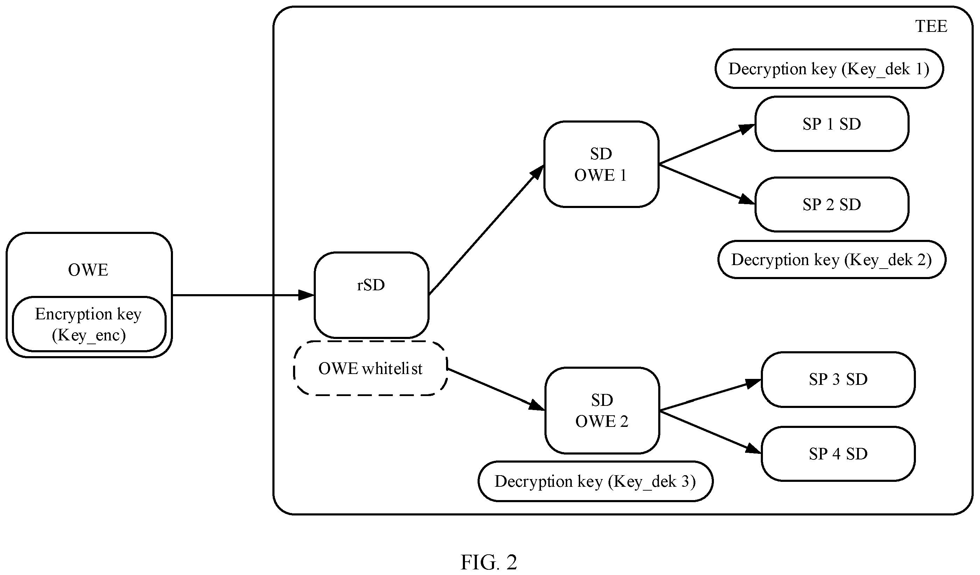

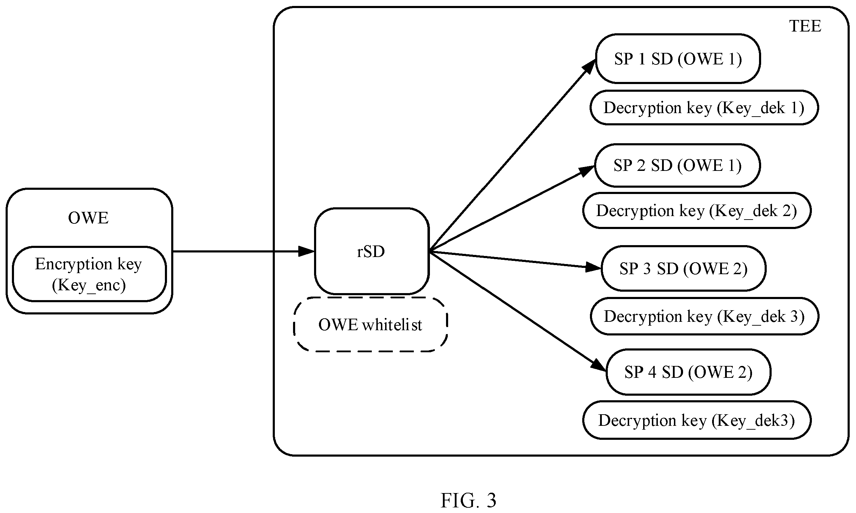

In this embodiment of the present invention, the OWE may deploy the decryption key in the SD of the TEE according to a management mode that may be implemented by the OWE, for example, may complete configuration of the decryption key in the following two manners: Manner 1: The OWE may deploy a different decryption key (Key_dek) for each SD associated with the OWE. Manner 2: The OWE may alternatively configure a same decryption key (Key_dek) for a plurality of SDs associated with one OWE. If double encryption of the TA data needs to be implemented, the decryption key may further include a decryption key used to decrypt the TA data and a decryption key used to decrypt the encrypted data in the offline management instruction. FIG. 2 and FIG. 3 show two possible manners in which a terminal stores an association relationship between a decryption key and an SD. An OWE 1 configures different decryption keys for an SP 1 SD and an SP 2 SD, and an OWE 2 configures a same decryption key for an SP 3 SD and an SP 4 SD (or the SP 3 SD and the SP 4 SD share one decryption key).

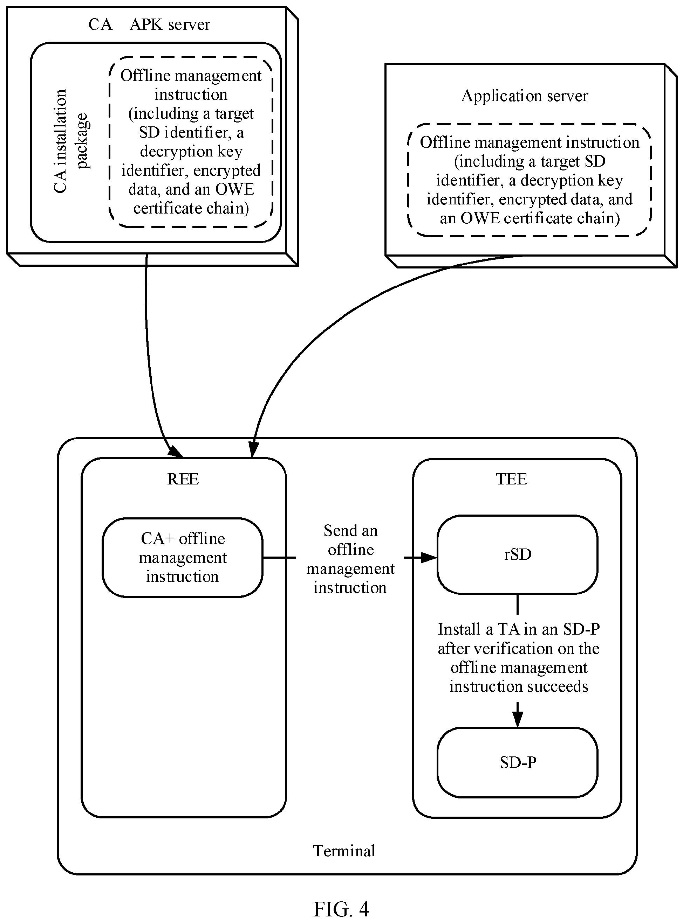

In the embodiments of the present invention, before offline management is performed, an offline management instruction (for example, an offline TA installation instruction or an offline TA update instruction) generated by the OWE further needs to be placed in each application management server, to implement rapid deployment of a TA of a service provider SP. Installation of the TA is used as an example. The OWE may deploy an offline TA installation instruction in the following two manners, as shown in FIG. 4. Manner 1: The offline TA installation instruction and a client application (Client Application, CA) are packed together to obtain a CA installation package, namely, an application packet. The application packet is placed in a server. For example, an Android (Android) installation package is placed in an Android application management server, for example, a common mobile phone application market such as Google Play or an official CA application website. After obtaining the CA installation package from the application management server and installing the CA, the REE can obtain the offline TA installation instruction and in addition, install the TA offline by using the offline TA installation instruction. Manner 2: Place the offline TA installation instruction on a TA application management server. When a CA of the REE needs to install a TA, the CA obtains a corresponding offline TA installation instruction of the TA from the TA application management server, and installs the TA offline by using the offline TAinstallation instruction. In the embodiments of the present invention, both a CA installation package placed on the application management server and data in the offline management instruction placed on the TA application management server are referred to as application packets.

The REE may obtain the offline management instruction in the two manners shown in FIG. 4, without a need to interact with the SP or a TSM of a TEE issuer and initiate a remote management process of applying for creating an SD and installing a TA. Therefore, load on a server side is lightened. When the TA offline management command and an APK of a CA are packed for installation, the user does not need to download a TA temporarily for use. This reduces a waiting time and avoids re-downloading that occurs due to communication transmission interruption/errors.

When obtaining an application packet, the REE sends an offline management instruction in the application packet to the TEE of the terminal. The TEE determines whether to execute the offline management instruction. When the TEE determines that the offline management instruction needs to be executed, the TEE determines whether the target SD has the offline management function. To be specific, the TEE determines, based on a target SD identifier and a decryption key identifier in the offline management instruction, whether the target SD exists, and whether the target SD includes a decryption key corresponding to the decryption key identifier.

When the target SD has the offline management function, the TEE authenticates the offline management instruction, to ensure that the offline management instruction is generated by an authorized OWE. After authentication succeeds, the TEE decrypts encrypted data by using the decryption key, and performs a corresponding management operation based on data obtained after the encrypted data is decrypted. When the target SD does not have the offline management function, to be specific, the TEE does not include the target SD corresponding to the target SD identifier in the offline management instruction, or the TEE includes the target SD corresponding to the target SD identifier, but the target SD does not include the decryption key corresponding to the decryption key identifier, the terminal applies, in an online management mode by using the OTrP, to the OWE for activating the offline management function of the target SD, and verifies and decrypts the offline management instruction after activating the offline management function, to further perform the offline management operation.

In an embodiment of the present invention, an OTrP protocol-based online remote management process of an OWE for an SD/a TA in a TEE starts from a GetDeviceTEEState instruction and response. The GetDeviceTEEState instruction and response can also be used to perform a bidirectional authentication process between the OWE and the TEE. As shown in FIG. 5. The bidirectional authentication includes the following steps.

S101: A terminal sends a management process request to the OWE.

A CA installed in an REE of the terminal initiates a management process to the OWE according to preset determining logic.

S102: The OWE sends a GetDeviceTEEState instruction to the TEE through the CA.

After receiving the management process request, the OWE generates GetDeviceTEEStateTBSRequest (GetDeviceTEEStateTBSRequest). Herein, TBS is to be signed (To be signed). GetDeviceTEEStateTBSRequest includes parameters such as a protocol number, a rid (instruction type identifier), a transaction ID (transaction id), online certificate status protocol (online certificate status protocol, OCSP) data, and an algorithm type required by a server. The transaction ID functions as a random number, and the OCSP data is used to provide OWE certificate status verification. The OWE uses an OWE private key to sign data in GetDeviceTEEStateTBSRequest, and encapsulates original data, a signature, a server certificate, and a certificate chain in a data format specified in the OTrP protocol to obtain the GetDeviceTEEState instruction. The server certificate herein is an OWE certificate, the certificate chain means that the OWE certificate is issued by an intermediate CA, and a certificate of the intermediate CA is issued by a root CA and/or one or more intermediate CAs authenticated by the root CA. It should be noted that, in the OTrP protocol, data exchanged between the OWE and the TEE is encrypted by using a content encryption key according to a JSON WebEncryption mechanism. The content encryption key is encrypted by using a public key of a communication peer end. In this case, the OWE does not know an identity of the TEE, and cannot obtain a public key of the TEE. Therefore, the GetDeviceTEEState instruction including GetDeviceTEEStateRequest is sent in plaintext.

S103: The CA in the REE forwards the GetDeviceTEEState instruction to an rSD in the TEE.

The CA in the REE forwards the GetDeviceTEEState instruction to the rSD in the TEE through a client application programming interface (client API).

S104: The rSD in the TEE verifies the signature and verifies the OWE certificate.

In S102, the GetDeviceTEEState instruction may be in a (JavaScript Object Notation, JSON) format. JSON is a lightweight data exchange format, and data is stored and represented in a text format that is completely independent of a programming language. In the OTrP, according to different instructions in the JSON format, different content is encapsulated in each JSON type, especially a payload (payload).

An OTrP instruction in the JSON format includes the following structure:

```
          {
          "payload": COMMAND-PAYLOAD,
                  "protected": "SIGNATURE-PRIMITIVE-TYPE",
                  "header": HEADER-TYPE,
                  "signature": "PRINTABLE-STRING-PRIMITIVE-TYPE"
          }
 
```

Herein, a signed main parameter (a signed parameter) in an offline management instruction is encapsulated in "payload";
"protected" includes a signature algorithm;
"header" includes certificate (certificate chain) information; and
"signature" includes a signature value of the offline management instruction.

The payload may usually include but is not limited to the following parameters:

```
          {
            "ver": "GP1.0",
                   "rid": "PRINTABLE-STRING-PRIMITIVE-TYPE",
                   "tid": "PRINTABLE-STRING-PRIMITIVE-TYPE",
                   "tee": "PRINTABLE-STRING-PRIMITIVE-TYPE",
                   "nextdsi": BOOLEAN,
                   "dsihash": "PRINTABLE-STRING-PRIMITIVE-TYPE",
                   "content": CONTENT-ENCRYPTION-TYPE
          }
```

In an OTrP online management protocol in the prior art, encryption is performed in a JWE (JSON Web Encryption) manner, then a content encryption key CEK and an HMAC key (if the HMAC key exists) are encrypted by using a peer public key, and information that needs to be encrypted is protected in a digital envelope manner. Herein, content includes an encrypted ciphertext and a corresponding parameter used to describe an encryption algorithm. For example, when an RSA encryption algorithm is used, a format of content-encryption-type is as follows:

```
          {
            "protected": "ENCRYPTION-PRIMITIVE-TYPE",
            "recipients": [
                {
                "header": {
                   "alg": "KEYWRAP-PRIMITIVE-TYPE"
                },
                "encrypted_key": "PRINTABLE-STRING-PRIMITIVE-TYPE"
                }
          ],
            "iv": "PRINTABLE-STRING-PRIMITIVE-TYPE",
            "ciphertext": ENCRYPTED-CONTENT,
            "tag": "PRINTABLE-STRING-PRIMITIVE-TYPE"
          }
```

Herein, ENCRYPTION-PRIMITIVE-TYPE describes an encryption algorithm, a mode, and an HMAC algorithm used for JWE; KEYWRAP-PRIMITIVE-TYPE indicates an algorithm used when the peer public key CEK is used for encapsulation; "PRINTABLE-STRING-PRIMITIVE-TYPE" is an encapsulated CEK; and ENCRYPTED-CONTENT is data encrypted by using the CEK. It can be learned that, in an OTrP instruction/response in an online mode, the content encryption key CEK is transmitted with the OTrP instruction/response. In this embodiment of the present invention, the CEK is not encapsulated and transmitted with the offline management instruction, and the offline management instruction includes a decryption key identifier used to decrypt data.

After receiving the GetDeviceTEEState instruction, the rSD in the TEE first verifies a signature of JSON data to ensure that data sent by the OWE is not tampered with. Then, it is determined that the server certificate of the OWE is issued by a root certificate authority in an OWE whitelist (if the OWE certificate is issued by an intermediate certificate authority, the OWE needs to provide a complete certificate chain in the GetDeviceTEEState instruction). The OCSP data is used to ensure that all certificates in the certificate chain are in a valid state. Subsequently, the rSD verifies the certificate chain by using a root certificate of the root certificate authority, to ensure that the OWE certificate is issued by the root certificate or a subordinate CA that can be finally verified by the root certificate.

If verification performed on the certificate chain and the signature succeeds, the rSD determines that the OWE that sends the GetDeviceTEEState instruction is an entity that is authenticated by a trusted certification authority of the rSD. The OWE has a specific TEE management capability. To be specific, the OWE has permission to manage the SD/TA (a corresponding instruction to manage the SD and TA can be authorized and executed). In this case, the TEE of the terminal completes authentication on the OWE. The TEE of the terminal responds to the GetDeviceTEEState instruction sent by the OWE.

S105: The TEE queries stored mapping relationship information, to obtain all SD information and TA information associated with the OWE.

The TEE records mapping relationship information of an SD and a TA that are created by the OWE in the TEE. The TEE queries all the SD and TA information associated with the OWE based on an OWE identifier in the server certificate. The OWE identifier is unique.

S106: The TEE generates an encryption key, and generates a GetDeviceTEEStateResponse (GetDeviceTEEStateResponse) message.

The TEE randomly generates a content encryption key CEK, to encrypt device state information (DeviceStateInformation) including data such as all the SD information associated with the OWE, all the TA information associated with the OWE, a TEE certificate, and a TEE-SP-AIK public key (list), encrypts the content encryption key by using an OWE public key included in the OWE certificate, signs the information by using a TEE private key, and generates and encapsulates the GetDeviceTEEStateResponse (GetDeviceTEEStateResponse) message in the JSON format. The TEE-SP-AIK herein is a public key pair generated by the TEE when the OWE generates an SD for a service provider SP and if the generated SD is the first SD of the SP, the public key is sent to the OWE, so that an OWE corresponding to the SP encrypts TA code and TA personalization data. That is, during TA installation (installTA), the TA code is encrypted for two times. The two times of encryption are described by using content in a management instruction in the following format as an example:

An encrypted part in a TA installation instruction in the OTrP includes the following content:

```
          {
          "tsmid": "PRINTABLE-STRING-PRIMITIVE-TYPE",
          "spid": "PRINTABLE-STRING-PRIMITIVE-TYPE",
          "sdname": "PRINTABLE-STRING-PRIMITIVE-TYPE",
          "spcert": "PRINTABLE-STRING-PRIMITIVE-TYPE",
          "taid": "PRINTABLE-STRING-PRIMITIVE-TYPE",
          "encryptedta_bin": "CONTENT-ENCRTPTION-TYPE",
          "encrypted_ta_data": "CONTENT-ENCRTPTION-TYPE",
          }
 
```

Content filled in "encrypted_ta_bin" and/or "encrypted_ta_data" includes an algorithm used to encapsulate a CEK 1 (which is used to encrypt the TA code and/or the TA personalization data), the content encryption key CEK 1 encapsulated by the TEE-SP-AIK, and the TA code and/or the TA personalization data that are encrypted by the CEK 1. Content of the two parameters is already in an encrypted state before the TA installation instruction is encrypted. Then, the OWE uses a JWE encryption mechanism to encrypt all parameters in the foregoing TA installation instruction by using a CEK 2, and uses the instruction to carry an algorithm for encapsulating the CEK 2, the CEK 2 encapsulated by the TEE public key, and the TA installation instruction encrypted by the CEK 2.
S107: The TEE sends the GetDeviceTEEStateResponse (GetDeviceTEEStateResponse) message to the REE.
S108: The REE sends the GetDeviceTEEStateResponse (GetDeviceTEEStateResponse) message to the OWE.
S109: The OWE verifies the GetDeviceTEEStateResponse (GetDeviceTEEStateResponse) message.

After receiving the GetDeviceTEEStateResponse message, the OWE first decrypts the encapsulated content encryption key by using the OWE private key, decrypts the DSI data by using the content encryption key, obtains the TEE certificate, verifies, by using the TEE public key in the TEE certificate, data signed by using the TEE private key, determines that a signature is generated by the TEE, and after the signature is verified, determines, through verification performed by using the root CA certificate that is used to authenticate the TEE, that the TEE certificate is issued by the certificate authority, to ensure validity of the TEE certificate and the signature. After verification performed on the TEE certificate and the signature succeeds, the OWE may determine validity of the TEE. In this case, bidirectional authentication is performed between the TEE and the OWE.

After completing bidirectional authentication with the TEE of the terminal, the OWE may initiate, based on obtained device status information of the TEE of the terminal, management on the SD/TA in the TEE, for example, creating/updating/deleting the SD, and installing/updating/deleting the TA. In a subsequent instruction exchange process (similar to a JSON structure), JWE is used to encrypt content that needs to be encrypted in the payload, and a public key in an obtained peer certificate is used to perform digital encryption (or referred to as digital envelope) on the content encryption key and the HMAC key, to ensure that encrypted content can be decrypted only by a peer end that has a private key.

Authorization verification on the OTrP instruction can be implemented by signing the OWE and by using the certificate chain. Provided that the TEE determines that an authenticated OWE certificate can be finally verified by using the root CA certificate, it can be determined that the OWE has permission to manage the SD/TA that is associated with the OWE and that is in the TEE.

In a case of implementing offline management of the TEE, that is, completing management without real-time bidirectional interaction between the OWE and the TEE, the bidirectional authentication mechanism described in FIG. 5 and a manner of encrypting instruction content by performing digital envelope processing on a JWE key by using a peer public key pair in subsequent instruction exchange are no longer applicable.

In this embodiment of the present invention, the OWE pre-generates a key pair: an encryption key and a decryption key. The encryption key is used by the OWE to encrypt data that needs to be encrypted in a payload of the offline management instruction. The offline management instruction may include information such as encrypted data encrypted by using the encryption key, a decryption key identifier, a target SD identifier, an OWE certificate, and signing some to-be-signed data in the payload by using an OWE private key. The offline management instruction may be placed in an application management server in the two manners shown in FIG. 4.

The decryption key is used to decrypt the encrypted data in the offline management instruction. The OWE deploys the decryption key in the SD, so that the SD has an offline management capability. In this embodiment of the present invention, for an existing OTrP standard, the SD may not have an offline management function initially. When the OWE deploys the decryption key in the SD according to a possible management mode, the OWE may deploy the decryption key in the SD when creating the SD, and indicate that the decryption key may provide the offline management function for one or more SDs managed by the OWE; or the OWE may activate the offline management function of the SD by updating the SD subsequently.

In an embodiment of the present invention, the OWE may (actively activate the offline management function of the SD according to preset logic before obtaining an offline instruction) receive a fifth message (or referred to as a decryption key obtaining request message) sent by the terminal, to request the OWE to configure the decryption key. After receiving the fifth message, the OWE performs bidirectional authentication with the terminal in an OTrP GetDeviceState interaction process, and obtains device information such as SD/TA information associated with the OWE in the TEE of the terminal. The OWE sends a sixth message (or referred to as an SD creation instruction or an SD update instruction) to the terminal. The sixth message includes at least one decryption key and a key attribute parameter. The key attribute parameter includes at least key access permission, for example, indicates whether the decryption key can be shared, and specific SDs that can share the decryption key when the decryption key can be shared, so that the TEE generates an association relationship between a key and an SD based on the key attribute parameter. The OWE sets access permission for the stored decryption key. The association information includes one or more of the following manners: there is a one-to-one correspondence between at least one decryption key and at least one SD, there is a correspondence between each of at least one decryption key and a plurality of related SDs in at least one SD, or there is a correspondence between at least one decryption key and one SD. The TEE of the terminal separately stores at least one decryption key in a storage area of a target SD corresponding to the at least one decryption key, and stores the association information.

It should be noted that, provided that there is an association relationship between a target SD and a decryption key that is in the TEE and that is deployed by a same OWE in another SD, that is, the target SD can access the decryption key in another SD, the target SD has the offline management function, and can execute an offline management instruction that is for the target SD and that matches the decryption key identifier.

That is, in this scenario, after the terminal receives the offline management instruction (including a decryption key identifier A) from the OWE 1, the terminal determines whether a target SD corresponding to the target SD identifier includes a decryption key corresponding to the decryption key identifier, and there are the following two cases: 1. The target SD stores a decryption key corresponding to the decryption key identifier A. 2. The OWE 1 has configured, for another SD in the TEE, a decryption key corresponding to the decryption key identifier A, and the target SD has been associated with the decryption key, and has access permission for the decryption key. Therefore, the target SD can decrypt the offline management instruction.

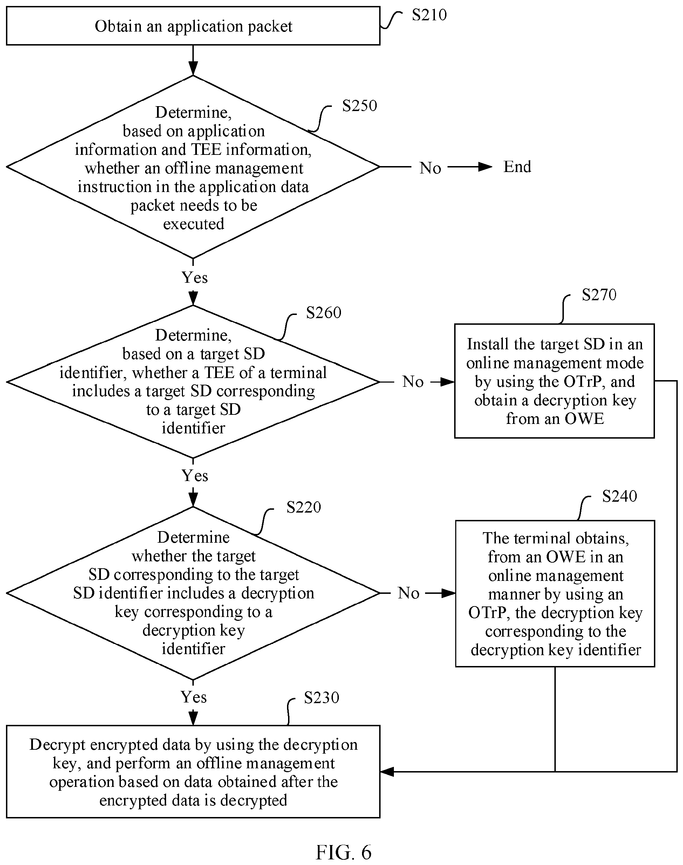

After an OWE configures a decryption key for an SD in a TEE of a terminal and places an offline management instruction in an application management server, in the technical solution, the management method shown in FIG. 6 may be performed. The management method may include the following steps.

S210: A terminal obtains an application packet.

An REE of the terminal obtains the application packet from a CA APK server or the application management server in FIG. 4. The application packet includes an offline management instruction, and the offline management instruction may include a target SD identifier, a decryption key identifier, and encrypted data. The decryption key identifier is used to indicate a corresponding decryption key, and the TEE of the terminal decrypts the encrypted data by using the decryption key. The encrypted data is generated by the OWE by using an encryption key. In this embodiment of the present invention, the encryption key and the decryption key may be symmetric keys or asymmetric keys. When the encryption key and the decryption key are symmetric keys, the terminal stores a private key, and the OWE may configure a same private key for a batch of devices, to implement an offline encryption method described in the present invention.

In this embodiment of the present invention, the application packet is generated by the OWE and placed in the CAAPK server or the application management server. For a process, refer to the description in FIG. 4. In addition, it should be further noted that, in this embodiment of the present invention, that the OWE encrypts, by using the encryption key, data that needs to be encrypted, and generates the offline management instruction and that the OWE deploys the decryption key in the SD of the terminal are two processes that do not interfere with each other.

In an embodiment of the present invention, the TEE of the terminal directly decrypts the encrypted data by using the decryption key corresponding to the decryption key identifier. In another embodiment of the present invention, the TEE of the terminal obtains a session key through calculation performed by using a key calculation parameter included in the offline management instruction and the decryption key corresponding to the decryption key identifier, and decrypts the encrypted data by using the session key. The session key may also be referred to as a content encryption key.

S220: The terminal determines whether the target SD corresponding to the target SD identifier includes the decryption key corresponding to the decryption key identifier.

In this embodiment of the present invention, the terminal may determine, based on association information stored in the TEE, whether the target SD has an association relationship with the decryption key, or determine whether the target SD has access permission for the decryption key. The association information may include a correspondence between a target SD identifier and a decryption key identifier or a correspondence between a target SD and a decryption key, as shown in Table 1. In this embodiment of the present invention, when the terminal determines that the target SD has the association relationship with the decryption key, it is considered that a storage area of the target SD corresponding to the target SD identifier includes the decryption key corresponding to the decryption key identifier, or the target SD has access permission for a decryption key that is deployed by a same OWE in another SD managed by the OWE.

**Table 1**

| Decryption key | Target SD |
|---|---|
| [Key 1] | [OWE 1-SD 1] |
| [Key 2] | [OWE 2-SD 2] |
| | [OWE 2-SD 3] |
| | [OWE 2-SD 4] |
| [Key 3] | [OWE 1-SD 5] |

The OWE 1 respectively deploys different decryption keys - the key 1 and the key 3 in the SD 1 and the SD 5. The OWE 2 deploys a decryption key - the key 2 in one of the SD 2, the SD 3, and the SD 4, and associates the key 2 with the three SDs by using a key attribute parameter. The three SDs share the key 2. Further, if the OWE determines to use different encryption keys to perform encryption for two times on the offline management instruction of the SD 1, the OWE needs to deploy two corresponding decryption keys in the SD 1.

The association information is recorded by the TEE when the OWE deploys the decryption key in the TEE of the terminal. Table 1 is merely used to describe a correspondence between a target SD and a decryption key, and does not limit whether the association information includes the correspondence between a decryption key and a target SD or the correspondence between a decryption key identifier and a target SD identifier. In addition, Table 1 is merely an expression manner of the association relationship, and a specific form of the association information is not limited in this embodiment of the present invention.

In this embodiment of the present invention, as shown in Table 1, the same OWE 1 may select different SDs to deploy different decryption keys; and the same OWE2 may select different SDs to deploy a shared decryption key.

The OWE may configure the decryption key for the SD when the terminal is delivered or when the SD is created. A manner in which the OWE configures the decryption key may be configured in the manners shown in FIG. 2 and FIG. 3. The OWE may configure a different decryption key for each SD, or configure a same decryption key for a plurality of SDs associated with one OWE.

When the target SD corresponding to the target SD identifier includes the decryption key corresponding to the decryption key identifier, S230 is performed; or when the target SD corresponding to the target SD identifier does not include the decryption key corresponding to the decryption key identifier, S240 is performed.

S230: The terminal decrypts the encrypted data by using the decryption key, and performs an offline management operation based on data obtained after the encrypted data is decrypted.

In a process of performing a decryption operation on the encrypted data, according to different selected encryption protocols/modes, the encrypted data may be directly decrypted based on the decryption key, or the content encryption key may be derived based on the key calculation parameter and the decryption key in the offline management instruction, to decrypt the encrypted data.

In this embodiment of the present invention, the offline management operation includes but is not limited to installing a TA and updating a TA. The encrypted data may be other encrypted data including an encrypted TA installation package, a TA update package, and the like (refer to encrypted content and a double-encryption structure in a TA installation instruction described in S106).

When double-encryption exists, data that is encrypted for two times also includes a corresponding second decryption key identifier and/or a corresponding key calculation parameter. The TEE of the terminal first decrypts the encrypted data based on a first decryption key identifier in an offline instruction, and after decryption, obtains a second decryption key based on the second decryption key identifier in the data that is encrypted for two times, to decrypt the data that is encrypted for two times.

In an embodiment of the present invention, the terminal directly decrypts the encrypted data by using the decryption key, and then performs the offline management operation based on the data obtained after the encrypted data is decrypted.

In another embodiment of the present invention, the terminal derives, by using the decryption key and the key calculation parameter in the instruction, the content encryption key/data encryption key used to encrypt the data, decrypts the encrypted data by using the content encryption key, and then performs the offline management operation based on the data obtained after the encrypted data is decrypted.

S240: The terminal obtains, from the OWE in an online management mode by using an OTrP, the decryption key corresponding to the decryption key identifier.

When the target SD does not have the decryption key and cannot decrypt the encrypted data, the terminal establishes a communication connection to the OWE, and obtains the decryption key from the OWE in the online management mode by using the OTrP. The terminal and the OWE perform bidirectional authentication. After bidirectional authentication is completed, the terminal receives the decryption key that is sent by the OWE in the online management mode (for example, sending personal data to the SD by using an SD update instruction or another instruction) by using the OTrP. Then the terminal decrypts the encrypted data in the offline management instruction by using the decryption key, and performs the offline management operation based on the data obtained after the encrypted data is decrypted. That is, S230 is performed.

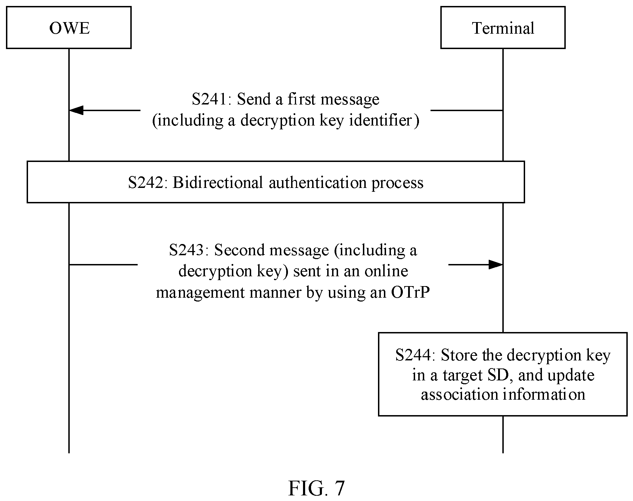

In an embodiment of the present invention, as shown in FIG. 7, a process in which the terminal obtains the decryption key from the OWE in the online management mode by using the OTrP may include the following steps.

S241: The terminal sends a first message to the OWE.

The first message includes the decryption key identifier, and is used by the terminal to obtain the decryption key corresponding to the decryption key identifier. In this embodiment of the present invention, the first message may be referred to as a decryption key obtaining request or another name. This is not limited in this embodiment of the present invention.

S242: The OWE performs bidirectional authentication with the terminal.

A process of S240 in this embodiment of the present invention is the same as the process in FIG. 5. For brevity of description, details are not described herein again.

S243: The terminal receives a second message sent by the OWE in an online management mode by using the OTrP.

The second message includes the decryption key. The second message may be the SD update instruction, and the decryption key is configured in the target SD in an SD update manner.

The decryption key may be encrypted by using a TEE-SP-AIK generated when the SP creates the SD for the first time, or may be directly encrypted by using a TEE public key.

S244: The terminal stores the decryption key in a secure memory area of the target SD, and updates the association information.

The terminal stores the decryption key in the target SD in the TEE, and updates the association information stored in the TEE. The following shows an example of updating the association information:

It is assumed that the target SD is an SD 7, and the decryption key that corresponds to the decryption key identifier and that needs to be obtained is a key 4. Therefore, the terminal obtains the decryption key - the key 4 online, and updates the association information. The updated association information is Table 2.

**Table 2**

| Decryption key | Target SD |
|---|---|
| Key 1 | OWE 1-SD 1 |
| Key 2 | |
| | OWE 2-SD 2 |
| | OWE 2-SD 3 |
| | OWE 2-SD 4 |
| Key 3 | OWE 1-SD 5 |
| Key 4 | OWE 1-SD 7 |

Optionally, the second message includes a key attribute parameter of the decryption key, so that the TEE updates access permission of the association information and the key based on the attribute parameter. In the example in Table 2, the OWE sets the key 4 as a decryption key that cannot be shared, and the TEE stores the key 4 and establishes an association relationship between the key 4 and the SD 7.

Optionally, as shown in FIG. 6, in this embodiment of the present invention, the offline management instruction may further include application information of the encrypted data. After the terminal obtains the application packet, the method may further include:

S250: The terminal determines, based on the application information and TEE information, whether a TEE module needs to execute the offline management instruction.

The TEE information is application information corresponding to an application installed in a TEE module of the terminal. In this embodiment of the present invention, the application information may be information such as application version information and an application name.

For example, if the offline management instruction is used to install the TA, the application information may be an application identifier or an application name of the TA. If the offline management instruction is used to update the TA, the application information may be a TA name and TA version information.

When the offline management instruction is to install the TA, and the TEE of the terminal does not include an application corresponding to the application information, the terminal performs S260. When the application corresponding to the application information has been installed in the TEE of the terminal, the offline management instruction is not performed.

When the offline management instruction is to update the TA, whether the target TA exists is checked. If the target TA exists and a version of the TA installed in the TEE is earlier than a version of the TA in the offline management instruction, S230 is performed.

S260: The terminal determines, based on the target SD identifier, whether the TEE of the terminal includes the target SD corresponding to the target SD identifier.

When the TEE includes the target SD corresponding to the target SD identifier, the terminal performs step 230. When the TEE does not include the target SD corresponding to the target SD identifier, step 270 is performed.

S270: The terminal installs the target SD in the online management mode by using the OTrP, and obtains the decryption key from the OWE.

The terminal establishes a communication connection to the OWE, and performs bidirectional authentication. After bidirectional authentication is completed, the terminal receives a target SD installation instruction sent by the OWE in the online management mode by using the OTrP, obtains the decryption key from the OWE, installs the target SD, obtains the decryption key, and then performs S230.

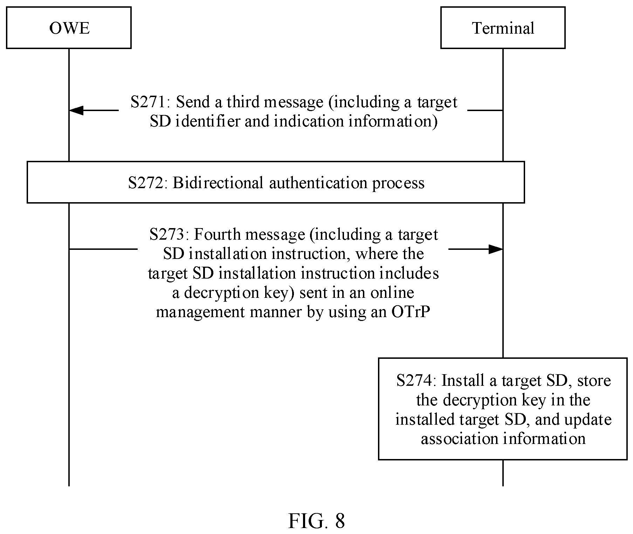

In this embodiment of the present invention, as shown in FIG. 8, that the terminal installs the target SD in the online management mode by using the OTrP, and obtains the decryption key from the OWE includes the following steps.

S271: The terminal sends a third message to the OWE.

The third message may include the target SD identifier and instruction information. The third message is used to request to install the target SD corresponding to the target SD identifier, and the instruction information is used to instruct to obtain the decryption key from the OWE. In this embodiment of the present invention, the third message may be referred to as a target SD obtaining request message. Optionally, in an embodiment of the present invention, the instruction information may be the decryption key identifier.

S272: The OWE performs bidirectional authentication with the terminal.

A process of S2720 in this embodiment of the present invention is the same as the process in FIG. 5. For brevity of description, details are not described herein again.

S273: The terminal receives a fourth message sent by the OWE in the online management mode by using the OTrP.

The fourth message includes the target SD installation instruction, and the target SD installation instruction includes the decryption key corresponding to the decryption key identifier.

S274: The terminal installs the target SD, stores the decryption key in the installed target SD, and updates the association information.

According to the management method in this embodiment of the present invention, management of the TEE in an offline case can be implemented.

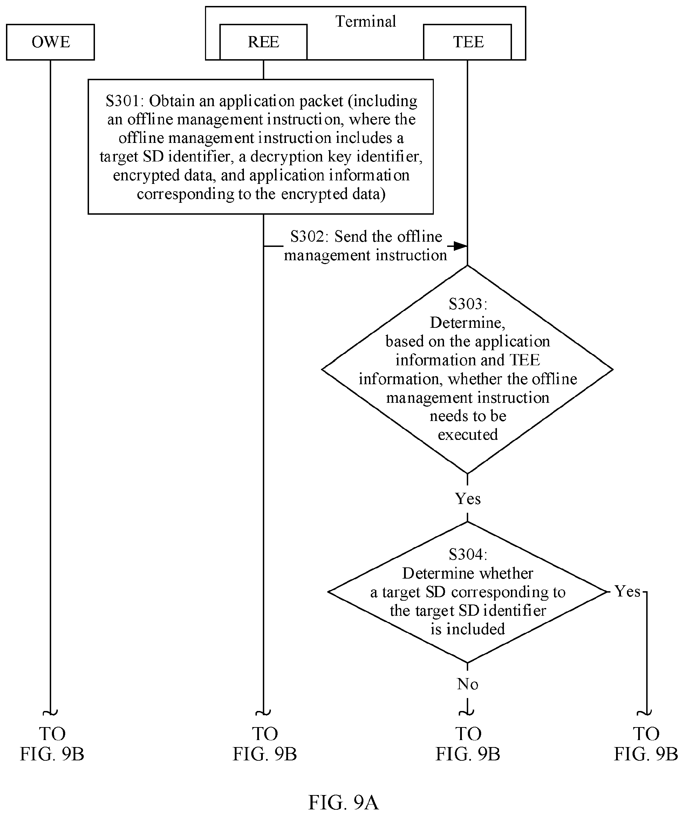

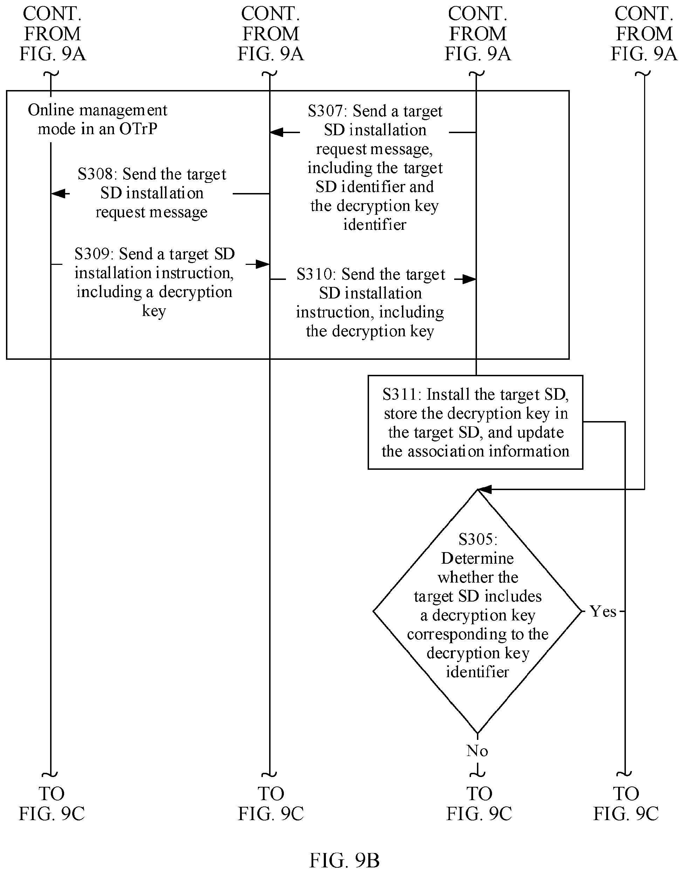

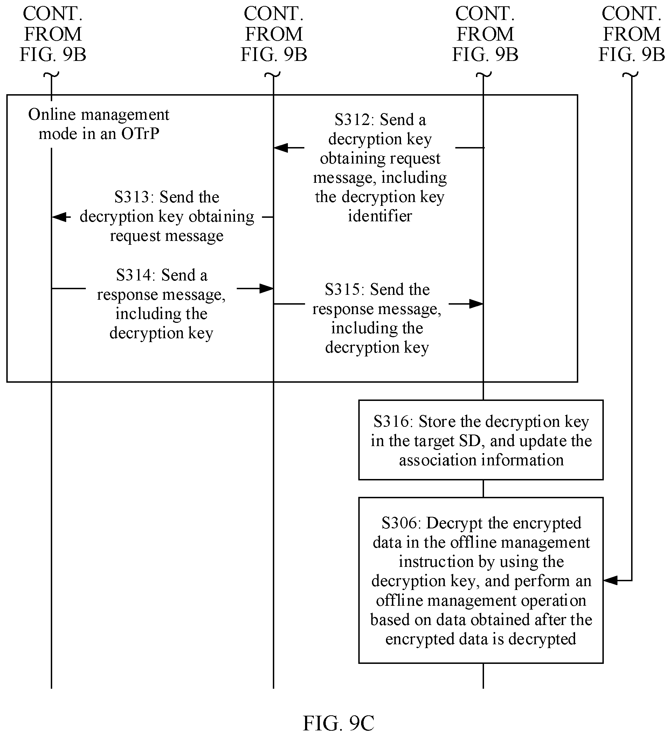

In this embodiment of the present invention, there may be two manners of implementing the following steps: The terminal determines, based on the application information, whether the corresponding application is installed in the terminal, the terminal determines, based on the target SD identifier, whether the terminal includes the target SD, and the terminal determines whether the target SD corresponding to the target SD identifier includes the decryption key corresponding to the decryption key identifier. For details, refer to FIG. 9A to FIG. 9C, FIG. 10(a)-1, FIG. 10(a)-2, FIG. 10(b)-1, and FIG. 10(b)-2.

FIG. 9A to FIG. 9C are a schematic flowchart of a management method according to an embodiment of the present invention. As shown in FIG. 9A to FIG. 9C, the method may include the following steps.

S301: An REE of a terminal obtains an application packet.

The application packet includes an offline management instruction. The offline management instruction includes information such as a target SD identifier, a decryption key identifier, encrypted data (for example, a TA installation package or a TA update package), application information corresponding to the encrypted data, a signature, and an OWE certificate. The application information may be application version information, an application identifier, an application name, or the like.

S302: The REE of the terminal sends the offline management instruction in the application packet to a TEE of the terminal.

A client application in the REE sends the offline management instruction to the TEE, and the TEE determines whether the offline management instruction needs to be executed.

S303: The TEE of the terminal determines, based on the application information and TEE information, whether the offline management instruction needs to be executed.

The TEE information is application information corresponding to an application installed in a TEE module of the terminal. For example, an offline management operation corresponding to the offline management instruction may be installing a TA whose application name is 1234. The TEE determines whether the TA whose application name is 1234 is installed, and if the TA whose application name is 1234 is installed, cancels a related operation of the offline management instruction, or if the TA whose application name is 1234 is not installed, performs S304.

S304: The TEE of the terminal determines whether the terminal includes a target SD corresponding to the target SD identifier.

When the terminal includes the target SD, the TEE performs S305. When the terminal does not include the target SD, the terminal performs S307 to S311.

S305: The TEE of the terminal determines whether the target SD includes a decryption key corresponding to the decryption key identifier.

When the target SD includes the decryption key corresponding to the decryption key identifier, the terminal performs S306; or when the target SD does not include the decryption key corresponding to the decryption key identifier, S312 to S316 are performed.

S306: The terminal decrypts the encrypted data in the offline management instruction by using the decryption key, and performs the offline management operation based on data obtained after the encrypted data is decrypted.

The TEE verifies an OWE certificate in the offline management instruction by using a CA certificate in an OWE whitelist, obtains an OWE public key in the OWE certificate, and verifies, by using the OWE public key, a signature for which an OWE private key is used. After verification succeeds, it is proved that the offline management instruction is generated by a trusted OWE, and the offline management instruction is executed.

If the offline management instruction is to install a TA, TA code and TA data are decrypted to perform a TA installation operation. If the offline management instruction is to update a TA, TA code and TA data are decrypted to perform a TA update operation. In this embodiment of the present invention, in S307 to S316, communication between the REE and the OWE is established in an online management mode in an OTrP, and the terminal needs to establish a communication connection to the OWE. Only after bidirectional authentication is performed, the OWE sends, to the REE, information requested by the REE. A bidirectional authentication process is the same as a bidirectional authentication process shown in FIG. 5. For brevity, details are not described herein again.

S307: The TEE sends, to the REE, a target SD installation request message, where the request message includes the target SD identifier and the decryption key identifier.

S308: The REE forwards the target SD installation request message to the OWE.

S309: The OWE sends a target SD installation instruction to the REE, where the target SD installation instruction includes the decryption key corresponding to the decryption key identifier.

After receiving the request message that is for installing the target SD and that is sent by the REE, the OWE performs bidirectional authentication with the TEE. An authentication process is the same as the bidirectional authentication process in FIG. 5. For brevity, details are not described herein again. After bidirectional authentication succeeds, the OWE sends the target SD installation instruction to the REE.

S310: The REE forwards the target SD installation instruction to the TEE.

S311: The TEE installs the target SD, stores the decryption key in the installed target SD, updates association information, and performs S306.

S312. The TEE sends a decryption key obtaining request message to the REE, where the decryption key obtaining request message includes the decryption key identifier.

S313: The REE forwards the decryption key obtaining request message to the OWE.

S314: The OWE sends a response message of the decryption key obtaining request message to the REE, where the response message includes the decryption key.

After receiving the decryption key obtaining request message sent by the REE, the OWE performs bidirectional authentication with the TEE. An authentication process is the same as the bidirectional authentication process in FIG. 5. For brevity, details are not described herein again. After bidirectional authentication succeeds, the OWE sends the response message of the decryption key obtaining request message to the REE.

S315: The REE forwards the response message to the TEE.

S316: The TEE stores the decryption key in the target SD, updates association information, and performs S306.

According to the management method in this embodiment of the present invention, management of the TEE in an offline case can be implemented.

FIG. 10(a)-1, FIG. 10(a)-2, FIG. 10(b)-1, and FIG. 10(b)-2 are schematic flowcharts of another management method according to an embodiment of the present invention. As shown in FIG. 10(a)-1, FIG. 10(a)-2, FIG. 10(b)-1, and FIG. 10(b)-2, the method may include the following steps.

S401: An REE of a terminal obtains an application packet.

The application packet includes an offline management instruction. The offline management instruction includes information such as a target SD identifier, a decryption key identifier, encrypted data (a TA installation package or a TA update package), application information corresponding to the encrypted data, a signature, and an OWE certificate. The application information may be application version information, an application identifier, an application name, or the like.

For example, an offline management operation corresponding to the offline management instruction is to update a TA, and the application information is a TA whose version is 3.0. The REE needs to determine whether a TA whose version is later than 3.0 is installed in a TEE. If a TA whose version is later than 3.0 is installed in the TEE, a TA update operation is terminated.

S402: The REE sends, to the TEE of the terminal, an application information obtaining request message, to determine whether an execution condition of the offline management instruction is met.

In an embodiment of the present invention, the application information obtaining request message includes application information corresponding to the encrypted data.

S403: The TEE sends, to the REE, an application information obtaining response message.

In an embodiment of the present invention, the response message includes TEE information, namely, information about all TAs installed in the TEE.

In another embodiment of the present invention, the response message is whether the TEE includes an application corresponding to the application information.

After obtaining the response message, the REE compares the TEE information in the response message with the application information included in the offline management instruction, to determine whether the execution condition of the offline management instruction is met.

S404: The REE determines, based on the response message and the application information, whether the offline management instruction needs to be executed.

In an embodiment of the present invention, the offline management instruction includes the application information, and the application information may include a TAidentifier and version information of a to-be-installed or to-be-updated TA.

The response message obtained by the REE from the TEE includes application information corresponding to all TAs installed in the TEE, and also includes TA identifiers and version information of the TAs installed in the TEE. Then, the REE determines, based on the response message and the application information in the offline management instruction, whether the offline management instruction needs to be executed.

If the response message does not include information about a TA corresponding to the application information or the response message is that the TEE does not include the application corresponding to the application information, S405 is performed.

For example, in an embodiment of the present invention, the offline management instruction is an offline TA installation instruction. The REE determines, based on a TA identifier in the application information in the offline TA installation instruction and a TA identifier of a TA installed in the TEE in the response message received by the REE from the TEE, whether the offline TA installation instruction needs to be executed. If a TA corresponding to the TA identifier in the offline TA installation instruction is not installed in the TEE, the offline TA installation instruction needs to be executed.

In another embodiment of the present invention, for example, the offline management instruction is an offline TA update instruction. The REE determines, based on TA version information in the application information in the offline TA installation instruction and version information of a TA installed in the TEE in the response message received by the REE from the TEE, whether the offline TA update instruction needs to be executed. If the version information of the TA installed in the TEE is earlier than TA version information corresponding to the offline TA update instruction, the offline TA update instruction needs to be executed to update the TA.

S405: The REE sends, to the TEE, an SD information obtaining request message.

In an embodiment of the present invention, the SD information obtaining request message includes the target SD identifier.

S406: The TEE sends, to the REE, an SD information obtaining response message.

In an embodiment of the present invention, the SD information obtaining response message includes information about all SDs included in the TEE. In another embodiment of the present invention, the SD information obtaining response message is information that the TEE includes a target SD corresponding to the target SD identifier or does not include a target SD corresponding to the target SD identifier.

S407: The REE determines, based on the SD information obtaining response message, whether the TEE includes the target SD corresponding to the target SD identifier.

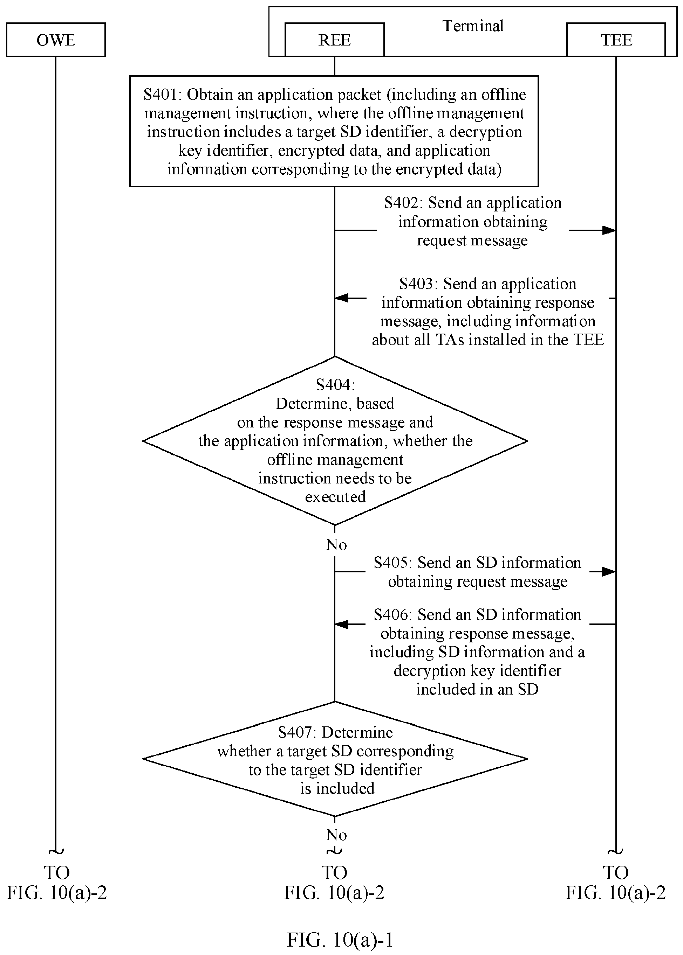

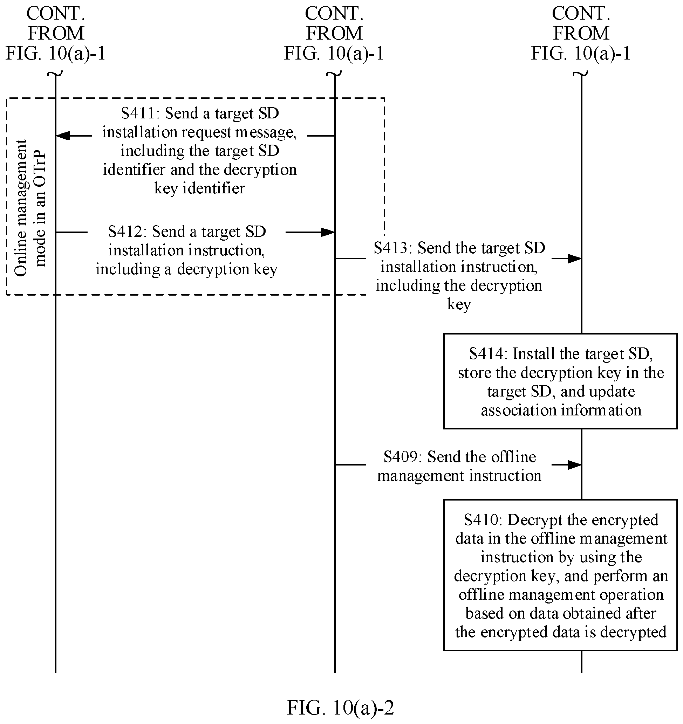

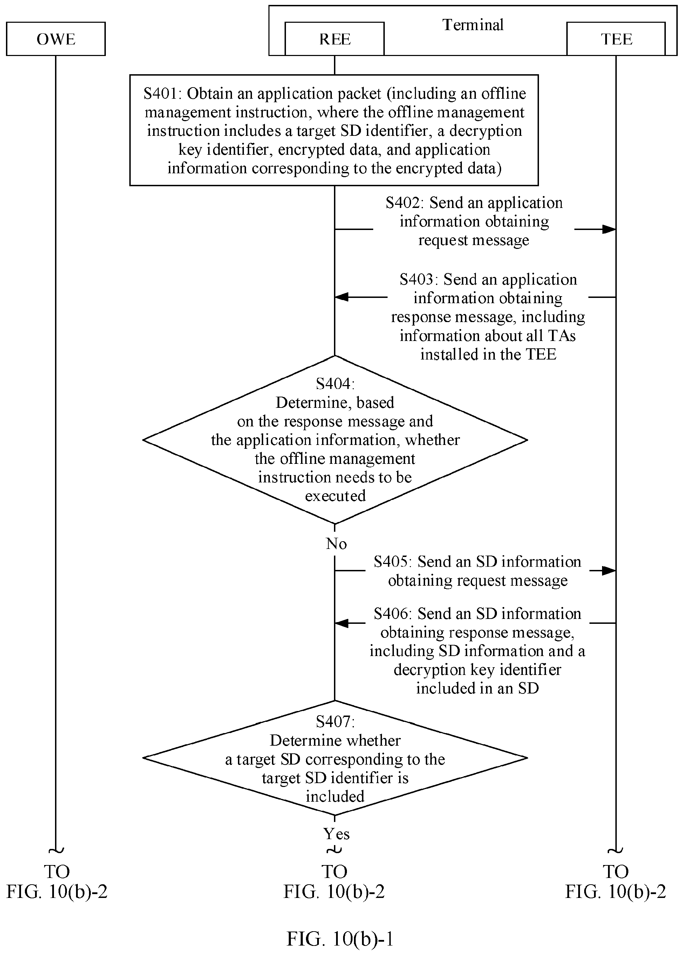

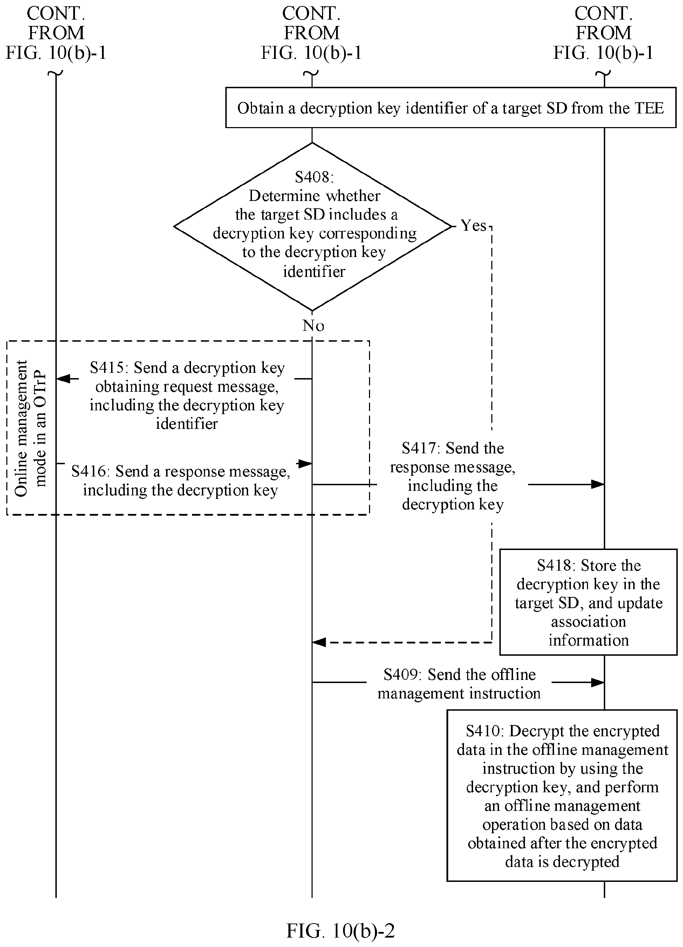

When the TEE does not include the target SD corresponding to the target SD identifier, the target SD corresponding to the target SD identifier is installed in an online management mode by using an OTrP, and S411 to S414 are specifically performed. When the TEE includes the target SD corresponding to the target SD identifier, S408 in FIG. 10(b)-2 is performed.

S408: The REE determines whether the target SD includes the decryption key corresponding to the decryption key identifier.

In an embodiment of the present invention, in S406, the SD information obtaining response message may include an SD included in the TEE and a decryption key identifier included in each SD.

In another embodiment of the present invention, the REE may send, to the TEE, a request for obtaining the decryption key in the target SD, where the request includes the target SD identifier, obtain the decryption key identifier of the target SD from the TEE, and then determine whether the target SD includes the decryption key corresponding to the decryption key identifier in the offline management instruction.

In another embodiment of the present invention, target SD information obtaining request may include the decryption key identifier in the offline management instruction, and the TEE returns information to the REE about whether the target SD includes the decryption key corresponding to the decryption key identifier.

When the target SD includes the decryption key corresponding to the decryption key identifier in the offline management instruction, S409 is performed; or when the target SD does not include the decryption key corresponding to the decryption key identifier in the offline management instruction, S415 to S418 in FIG. 10(b)-2 are performed.

S409: The REE sends the offline management instruction to the TEE.

S410: The TEE decrypts the encrypted data by using the decryption key, and performs an offline management operation based on data obtained after the encrypted data is decrypted.

The TEE verifies an OWE certificate in the offline management instruction by using a CA certificate in an OWE whitelist, obtains an OWE public key in the OWE certificate, and verifies, by using the OWE public key, a signature for which an OWE private key is used. After verification succeeds, it is proved that the offline management instruction is generated by a trusted OWE, and it is determined that the offline management instruction is a valid instruction. Then, the TEE decrypts the encrypted data by using the decryption key, and performs the offline management operation based on the data obtained after the encrypted data is decrypted.

In this embodiment of the present invention, in S411 to S418, communication between the REE and the OWE is established in an online management mode in an OTrP, and the terminal needs to establish a communication connection to the OWE. Only after bidirectional authentication is performed, the OWE sends, to the REE, information requested by the REE. A bidirectional authentication process is the same as a bidirectional authentication process shown in FIG. 5. For brevity, details are not described herein again.

S411: The REE sends, to the OWE, a target SD installation request message, where the request message includes the target SD identifier and the decryption key identifier.

S412: The OWE sends a target SD installation instruction to the REE, where the target SD installation instruction includes the decryption key corresponding to the decryption key identifier.

After receiving the request message that is for installing the target SD and that is sent by the REE, the OWE performs bidirectional authentication with the TEE. An authentication process is the same as the bidirectional authentication process in FIG. 5. For brevity, details are not described herein again. After bidirectional authentication succeeds, the OWE sends the target SD installation instruction to the REE.

S413: The REE forwards the target SD installation instruction to the TEE.

S414: The TEE installs the target SD, stores the decryption key in the installed target SD, updates association information, and performs S409.

S415: The REE sends a decryption key obtaining request message to the OWE, where the decryption key obtaining request message includes the decryption key identifier.

S416: The OWE sends a response message of the decryption key obtaining request message to the REE, where the response message includes the decryption key.

After receiving the decryption key obtaining request message sent by the REE, the OWE performs bidirectional authentication with the TEE. An authentication process is the same as the bidirectional authentication process in FIG. 5. For brevity, details are not described herein again. After bidirectional authentication succeeds, the OWE sends the response message of the decryption key obtaining request message to the REE.

S417: The REE forwards the response message to the TEE.

S418: The TEE stores the decryption key in the target SD, updates association information, and performs S409.

According to the management method in this embodiment of the present invention, management of the TEE in an offline case can be implemented. The OWE generates the offline management instruction. After the terminal obtains the offline management instruction, if the terminal determines that the target SD of the terminal does not have a function of executing the offline management instruction, the terminal applies to the OWE in an online manner for obtaining the decryption key by installing the SD or updating the SD, and decrypts the encrypted data in the offline management instruction by using the decryption key.

Optionally, in another embodiment of the present invention, the decryption key corresponding to the offline management instruction may be one-time. To be specific, when the management methods in FIG. 6 to FIG. 10(a)-1, FIG. 10(a)-2, FIG. 10(b)-1, and FIG. 10(b)-2 are performed, the decryption key needs to be obtained from the OWE in the online management mode by using the OTrP. The OWE may implement encryption or decryption by indicating the TEE not to store a key and an association relationship, or may implement this by using different decryption keys in different offline management instructions. This is not limited in the present invention.

Optionally, in another embodiment of the present invention, the offline management instruction may further include a key calculation parameter. When the target SD stores a master decryption key corresponding to the decryption key identifier, the TEE may obtain, by using the master decryption key and the key calculation parameter, a content encryption key that is actually used to encrypt data, decrypt the encrypted data by using the content encryption key, and then perform the offline management operation based on the data obtained after the encrypted data is decrypted.

FIG. 11 is a schematic structural diagram of a terminal according to an embodiment of the present invention. The terminal is applied to management of a trusted execution environment TEE that supports an open trust protocol OTrP. The terminal may include an obtaining unit 601 and a processing unit 602.

The obtaining unit 601 is configured to obtain an application packet. The application packet includes an offline management instruction, the offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE.

The processing unit 602 is configured to determine whether a target SD corresponding to the target SD identifier includes the decryption key corresponding to the decryption key identifier.

When the target SD includes the decryption key, the processing unit 602 decrypts the encrypted data by using the decryption key, and performs an offline management operation based on data obtained after the encrypted data is decrypted. The provided management method is used to implement offline management of the TEE in the OTrP.

In an embodiment of the present invention, the terminal further includes a sending unit 603, a receiving unit 604, and a storage unit 605.

The sending unit 603 is configured to: when the target SD does not include the decryption key, send a first message to the OWE, where the first message includes the decryption key identifier, and is used to obtain the decryption key corresponding to the decryption key identifier.

The receiving unit 604 is configured to receive a second message sent by the OWE in an online management mode by using the OTrP. The second message includes the decryption key.

The storage unit 605 is configured to store the decryption key in the target SD. The processing unit 602 decrypts the encrypted data by using the decryption key, and performs an offline management operation based on data obtained after the encrypted data is decrypted.

Optionally, in an embodiment of the present invention, the processing unit 602 is further configured to determine, based on the target SD identifier, whether the terminal includes the target SD corresponding to the target SD identifier.

Optionally, in an embodiment of the present invention, the sending unit 603 is configured to: when the terminal does not include the target SD corresponding to the target SD identifier, send a third message to the OWE. The third message includes instruction information, the third message is used to request to install the target SD corresponding to the target SD identifier, and the instruction information is used to instruct to deploy, in the target SD that is requested to be installed, the decryption key corresponding to the decryption key identifier.

The receiving unit 604 is configured to receive a fourth message sent by the OWE in the online management mode by using the OTrP. The fourth message includes a target SD installation instruction, and the target SD installation instruction includes the decryption key.

The processing unit 602 is further configured to install, according to the target SD installation instruction, the target SD corresponding to the target SD identifier. The storage unit 605 stores the decryption key in the installed target SD.

Optionally, in an embodiment of the present invention, the instruction information includes the decryption key identifier carried in the offline management instruction, and the target SD installation instruction includes the decryption key corresponding to the decryption key identifier.

Optionally, in an embodiment of the present invention, the second message and the fourth message each further include an attribute parameter of the decryption key. The processing unit 602 is further configured to update association information, and updated association information includes a correspondence between the target SD and the decryption key.

Optionally, in an embodiment of the present invention, the offline management instruction further includes application information; and the processing unit 602 is further configured to determine, based on the application information and TEE information, whether the offline management instruction needs to be executed. The TEE information is application information corresponding to an application installed in a TEE module of the terminal.

Optionally, in an embodiment of the present invention, the offline management instruction further includes a key calculation parameter, and that the processing unit 602 decrypts the encrypted data by using the decryption key includes:
the processing unit 602 calculates a session key by using the decryption key corresponding to the decryption key identifier and the key calculation parameter, and decrypts the encrypted data by using the session key.

Optionally, in an embodiment of the present invention, the sending unit 603 is configured to send a fifth message to the OWE. The fifth message is used by the OWE to configure a decryption key for at least one SD in the terminal.

The receiving unit 604 is configured to: receive a sixth message sent by the OWE in the online management mode by using the OTrP, where the sixth message includes at least one decryption key and an attribute parameter of the decryption key, and generate association information based on the attribute parameter of the decryption key. The association information includes one or two of the following manners: there is a one-to-one correspondence between the at least one decryption key and the at least one SD, or there is a correspondence between each of the at least one decryption key and a plurality of SDs in the at least one SD.

The storage unit 605 is configured to store the at least one decryption key and the association information.

Functions of function units of the terminal may be implemented by using steps performed by the terminal in the embodiments shown in FIG. 5 to FIG. 10(a)-1, FIG. 10(a)-2, FIG. 10(b)-1, and FIG. 10(b)-2. Therefore, a specific working process of the terminal provided in this embodiment of the present invention is not described herein again.

FIG. 12 is a schematic structural diagram of a server according to an embodiment of the present invention. The server is applied to management of a trusted execution environment TEE that supports an open trust protocol OTrP. The server may include:
a processing unit, configured to generate an offline management instruction, where the offline management instruction includes a target security domain SD identifier, a decryption key identifier, and encrypted data, a decryption key corresponding to the decryption key identifier is used to decrypt the encrypted data, the encrypted data is generated by the OWE by using an encryption key, the decryption key and the encryption key are a key pair generated by the OWE, and when a terminal obtains an application packet including the offline management instruction, the offline management instruction is used by the terminal to decrypt the encrypted data by using the decryption key corresponding to the decryption key identifier, and to perform an offline management operation based on data obtained after encrypted data is decrypted.

In an embodiment of the present invention, the server further includes a receiving unit 702 and a transmitter 703.

The receiving unit 702 is configured to: receive a first message sent by the terminal. The first message includes the decryption key identifier, and is used by the terminal to obtain the decryption key corresponding to the decryption key identifier.

The processing unit 701 is further configured to perform bidirectional authentication with a TEE of the terminal in an online management mode by using the OTrP, and the sending unit 703 sends a second message to the terminal after authentication succeeds. The second message includes the decryption key, the second message is used by the terminal to store the decryption key in a target SD and update association information, and the association information includes a correspondence between the target SD and the decryption key.

Optionally, in an embodiment of the present invention, the receiving unit 702 is configured to receive a third message sent by the terminal. The third message includes instruction information, the third message is used to request to install a target SD corresponding to the target SD identifier, and the instruction information is used to instruct to deploy, in the target SD that is requested to be installed, the decryption key corresponding to the decryption key identifier.

The processing unit 701 is configured to perform bidirectional authentication with the TEE of the terminal in the online management mode by using the OTrP, and the sending unit 703 sends a fourth message to the terminal after authentication succeeds. The fourth message includes a target SD installation instruction, the target SD installation instruction includes the decryption key, the fourth message is used by the terminal to install the target SD, store the decryption key in the installed target SD, and update association information, and the association information includes a correspondence between the target SD and the decryption key.

Optionally, in an embodiment of the present invention, the instruction information includes the decryption key identifier, and the target SD installation instruction includes the decryption key corresponding to the decryption key identifier.

Optionally, in an embodiment of the present invention, the receiving unit 702 is configured to receive a fifth message sent by the terminal. The fifth message is used by the OWE to configure a decryption key for at least one SD in the terminal.

The server performs bidirectional authentication with the terminal, and after authentication succeeds, the sending unit 703 sends a sixth message to the terminal. The sixth message includes at least one decryption key and an attribute parameter of the decryption key, the sixth message is used by the terminal to store the at least one decryption key and generate association information based on the attribute parameter of the decryption key, and the association information includes one or two of the following manners: there is a one-to-one correspondence between the at least one decryption key and the at least one SD, or there is a correspondence between each of the at least one decryption key and a plurality of SDs in the at least one SD.

Functions of function units of the server may be implemented by using steps performed by the OWE in the embodiments shown in FIG. 5 to FIG. 10(a)-1, FIG. 10(a)-2, FIG. 10(b)-1, and FIG. 10(b)-2. Therefore, a specific working process of the OWE provided in this embodiment of the present invention is not described herein again.

FIG. 13 is a schematic structural diagram of another terminal. The terminal is applied to management of a trusted execution environment TEE that supports an open trust protocol OTrP. The terminal includes a TEE module and a rich execution environment REE module, and the TEE module includes a receiving unit 801 and a processing unit 802.

The receiving unit 801 is configured to receive an offline management instruction sent by the REE module. The offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE.

The processing unit 802 is configured to determine whether a target SD corresponding to the target SD identifier includes the decryption key corresponding to the decryption key identifier.

When the target SD includes the decryption key, the processing unit 802 is further configured to: decrypt the encrypted data by using the decryption key, and perform an offline management operation based on data obtained after the encrypted data is decrypted. The provided management method is used to implement offline management of the TEE in the OTrP.

In an embodiment of the present invention, the TEE module further includes a sending unit 803 and a storage unit 804.

The sending unit 803 is configured to: when the target SD does not include the decryption key, send a first message to the OWE by using the REE module. The first message includes the decryption key identifier, and is used to obtain the decryption key corresponding to the decryption key identifier.

The processing unit 802 is further configured to receive, by using the REE module, a second message sent by the OWE in an online management mode by using the OTrP. The second message includes the decryption key.

The storage unit 804 is configured to store the decryption key in the target SD. The processing unit 802 decrypts the encrypted data by using the decryption key, and performs an offline management operation based on data obtained after the encrypted data is decrypted.

Optionally, in an embodiment of the present invention, the processing unit 802 is further configured to determine, based on the target SD identifier, whether the TEE module includes the target SD corresponding to the target SD identifier.

Optionally, in an embodiment of the present invention, the sending unit 803 is configured to: when the TEE module does not include the target SD corresponding to the target SD identifier, send, by the TEE module, a third message to the OWE by using the REE module. The third message includes instruction information, the third message is used to request to install the target SD corresponding to the target SD identifier, and the instruction information is used to instruct to deploy, in the target SD that is requested to be installed, the decryption key corresponding to the decryption key identifier.

The receiving unit 801 is configured to receive a fourth message sent by the OWE in the online management mode by using the OTrP. The fourth message includes a target SD installation instruction, and the target SD installation instruction includes the decryption key.

The processing unit 802 is further configured to: install, according to the target SD installation instruction, the target SD corresponding to the target SD identifier, and store the decryption key in the installed target SD.

Optionally, in an embodiment of the present invention, the instruction information includes the decryption key identifier, and the target SD installation instruction includes the decryption key corresponding to the decryption key identifier.

Optionally, in an embodiment of the present invention, the first message and the fourth message each further include an attribute parameter of the decryption key. The processing unit 802 is further configured to update association information, and updated association information includes a correspondence between the target SD and the decryption key.

Optionally, in an embodiment of the present invention, the offline management instruction further includes application information; and the processing unit 802 is further configured to determine, based on the application information and TEE information, whether the offline management instruction needs to be executed. The TEE information is application information corresponding to an application installed in the TEE module of the terminal.

Optionally, in an embodiment of the present invention, the offline management instruction further includes a key calculation parameter, and that the processing unit 802 decrypts the encrypted data by using the decryption key includes:
the processing unit 802 calculates a session key by using the decryption key corresponding to the decryption key identifier and the key calculation parameter, and decrypts the encrypted data by using the session key.

Optionally, in an embodiment of the present invention, the processing unit 802 is further configured to send a fifth message to the OWE by using the REE module. The fifth message is used by the OWE to configure a decryption key for at least one SD in the terminal.

The sending unit 803 is configured to receive, by using the REE module, a sixth message sent by the OWE in the online management mode by using the OTrP. The sixth message includes at least one decryption key and an attribute parameter of the decryption key.

The processing unit 802 generates association information based on the attribute parameter of the decryption key. The association information includes one or two of the following manners: there is a one-to-one correspondence between the at least one decryption key and the at least one SD, or there is a correspondence between each of the at least one decryption key and a plurality of SDs in the at least one SD.

The storage unit 804 is configured to store the at least one decryption key and the association information.

An embodiment of the present invention further provides a terminal. As shown in FIG. 14, the terminal includes a receiver, a transmitter, a processor, and a memory. The receiver, the transmitter, the processor, and the memory are connected to each other, and are configured to complete mutual communication. The terminal executes the methods performed by the terminal in FIG. 5 to FIG. 10(a)-1, FIG. 10(a)-2, FIG. 10(b)-1, and FIG. 10(b)-2.

The processor of the terminal is configured to perform the following operations:
obtaining an application packet, where the application packet includes an offline management instruction, the offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE;
determining whether a target SD corresponding to the target SD identifier includes the decryption key corresponding to the decryption key identifier; and
when the target SD includes the decryption key, decrypting the encrypted data by using the decryption key, and performing an offline management operation based on data obtained after the encrypted data is decrypted.

Functions of function units of the terminal may be implemented by using steps performed by the terminal in the embodiments shown in FIG. 5 to FIG. 10(a)-1, FIG. 10(a)-2, FIG. 10(b)-1, and FIG. 10(b)-2. Therefore, a specific working process of the terminal provided in this embodiment of the present invention is not described herein again.

The present invention further provides another terminal. As shown in FIG. 15, the terminal includes a TEE module and a rich execution environment REE module, and the TEE module includes a receiver and a processor.

The receiver is configured to receive an offline management instruction sent by the rich execution environment REE module of the terminal. The offline management instruction includes a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE.

The processor is configured to determine whether a target SD corresponding to the target SD identifier includes the decryption key corresponding to the decryption key identifier.

When the target SD includes the decryption key, the processor decrypts the encrypted data by using the decryption key, and performs an offline management operation based on data obtained after the encrypted data is decrypted.

The terminals provided in FIG. 14 and FIG. 15 may be mobile phones. The processor is a control center of the mobile phone and is connected to all parts of the entire mobile phone through various interfaces and lines, and performs various functions and data processing of the mobile phone by running or executing the software program and/or module stored in the memory and invoking data stored in the memory, to perform overall monitoring on the mobile phone. The processor may be a central processing unit (central processing unit, CPU), a general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. Optionally, the processor may include one or more processing units. Optionally, an application processor and a modem processor may be integrated into the processor. The application processor mainly processes an operating system, a user interface, an application program, and the like. The modem processor mainly processes wireless communication. Optionally, the processor may integrate an application processor and a modem processor. The application processor mainly processes an operating system, a user interface, an application program, and the like. The modem processor mainly processes the wireless communications. It may be understood that the modem processor may not be integrated into the processor.

The memory may be configured to store a software program and a module. The processor performs various function applications and data processing of the mobile phone by running the software program and the module stored in the memory. The memory may mainly include a program storage area and a data storage area. The program storage area may store an operating system, an application program required for at least one function (such as a sound playback function or an image playback function), and the like. The data storage area may store data (such as audio data or a phone book) created according to use of the mobile phone, and the like. In addition, the memory may include a volatile memory, for example, a nonvolatile dynamic random access memory (Nonvolatile Random Access Memory, NVRAM), a phase-change random access memory (Phase Change RAM, PRAM), and a magnetoresistive random access memory (Magnetoresistive RAM, MRAM). The memory 620 may further include a nonvolatile memory, for example, at least one magnetic disk storage device, an electrically erasable programmable read-only memory (Electrically Erasable Programmable Read-Only Memory, EEPROM), a flash memory device such as a NOR flash memory (NOR flash memory) or a NAND flash memory (NAND flash memory), or a semiconductor device such as a solid state disk (Solid State Disk, SSD). The memory may further include a combination of the foregoing types of memories.

An embodiment of the present invention further provides a server. As shown in FIG. 16, the server includes a transceiver, a processor, and a memory. The transceiver, the processor, and the memory are connected to each other, and are configured to complete mutual communication. The server performs the methods performed by the OWE in FIG. 5 to FIG. 10(a)-1, FIG. 10(a)-2, FIG. 10(b)-1, and FIG. 10(b)-2.

The processor is configured to generate an offline management instruction. The offline management instruction includes a target security domain SD identifier, a decryption key identifier, and encrypted data, a decryption key corresponding to the decryption key identifier is used to decrypt the encrypted data, the encrypted data is generated by the OWE by using an encryption key, the decryption key and the encryption key are a key pair generated by the OWE, and when a terminal obtains an application packet including the offline management instruction, the offline management instruction is used by the terminal to decrypt the encrypted data by using the decryption key corresponding to the decryption key identifier, and to perform an offline management operation based on data obtained after encrypted data is decrypted.

Functions of function units of the server may be implemented by using steps performed by the server in the embodiments shown in FIG. 5 to FIG. 10(a)-1, FIG. 10(a)-2, FIG. 10(b)-1, and FIG. 10(b)-2. Therefore, a specific working process of the terminal provided in this embodiment of the present invention is not described herein again.

FIG. 17 is a schematic diagram of a communications apparatus according to an embodiment of this application. As shown in FIG. 17, the communications apparatus 1700 may be a chip. The chip includes a processing unit and a communications unit. The processing unit may be a processor 1710, and the processor may be various types of processors described above. The communications unit may be, for example, an input/output interface 1720, a pin, or a circuit. The communications unit may include a system bus or may be connected to the system bus. Optionally, the communications apparatus further includes a storage unit. The storage unit may be a memory 1730 inside the chip, for example, a register, a cache, a random access memory (random access memory, RAM), an EEPROM, or a flash. The storage unit may alternatively be a memory outside the chip, and the memory may be various types of memories described above. The processor is connected to the memory, and the processor may run the instruction stored in the memory, so that the communications apparatus performs the methods performed by the terminal in FIG. 5 to FIG. 10(a)-1, FIG. 10(a)-2, FIG. 10(b)-1, and FIG. 10(b)-2.

An embodiment of the present invention further provides a computer readable storage medium, including an instruction. When the instruction is run on a device, the device is enabled to perform the methods performed in FIG. 5 to FIG. 10(a)-1, FIG. 10(a)-2, FIG. 10(b)-1, and FIG. 10(b)-2.

An embodiment of this application further provides a computer program product or a computer program including an instruction. When the computer program product or the computer program is run on a computer, the computer is enabled to perform the methods performed in FIG. 5 to FIG. 10(a)-1, FIG. 10(a)-2, FIG. 10(b)-1, and FIG. 10(b)-2.

An embodiment of the present invention further provides a system. The system may include the terminal described in FIG. 11 or FIG. 13 and the server described in FIG. 12. Alternatively, the system may include the terminal described in FIG. 14 or FIG. 15, and the server described in FIG. 16.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or other programmable apparatuses. The computer instructions may be stored in a computer readable storage medium or may be transmitted from one computer readable storage medium to another computer readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

The foregoing descriptions are merely specific example implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A management method, applied to management of a trusted execution environment TEE that supports an open trust protocol OTrP, wherein the management method comprises:
obtaining (S210), by a terminal, an application packet, wherein the application packet comprises an offline management instruction, the offline management instruction comprises a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE, the terminal being applied to management of the TEE;
determining (S220), by the terminal, whether a target SD corresponding to the target SD identifier comprises the decryption key corresponding to the decryption key identifier; and
when the target SD comprises the decryption key, decrypting, by the terminal, the encrypted data by using the decryption key, and performing an offline management operation based on data obtained after the encrypted data is decrypted;
wherein the encrypted data comprise a trusted application, TA, installation package or a TA update package; and
wherein the offline management instruction further comprises a key calculation parameter, and the decrypting, by the terminal, the encrypted data by using the decryption key comprises:
calculating, by the terminal, a session key by using the decryption key corresponding to the decryption key identifier and the key calculation parameter, and decrypting the encrypted data by using the session key.

2. The management method according to claim 1, wherein the management method further comprises:
when the target SD does not comprise the decryption key, sending (S241), by the terminal, a first message to the OWE, wherein the first message is used to obtain the decryption key corresponding to the decryption key identifier;
receiving (S243), by the terminal, a second message sent by the OWE in an online management mode by using the OTrP, wherein the second message comprises the decryption key; and
decrypting, by the terminal, the encrypted data by using the decryption key, and performing an offline management operation based on data obtained after the encrypted data is decrypted.

3. The management method according to claim 1 or 2, wherein before the determining, by the terminal, whether a target SD corresponding to the target SD identifier comprises the decryption key corresponding to the decryption key identifier, the management method further comprises:
determining (S260), by the terminal based on the target SD identifier, whether the terminal comprises the target SD corresponding to the target SD identifier.

4. The management method according to claim 3, wherein the management method further comprises:
when the terminal does not comprise the target SD corresponding to the target SD identifier, sending, by the terminal, a third message to the OWE, wherein the third message comprises instruction information, the third message is used to request to install the target SD corresponding to the target SD identifier, and the instruction information is used to instruct to deploy, in the target SD that is requested to be installed, the decryption key corresponding to the decryption key identifier;
receiving, by the terminal, a fourth message sent by the OWE in the online management mode by using the OTrP, wherein the fourth message comprises a target SD installation instruction, and the target SD installation instruction comprises the decryption key; and
installing, by the terminal according to the target SD installation instruction, the target SD corresponding to the target SD identifier, and storing the decryption key in the installed target SD;
wherein the first message and the third message each comprise the decryption key identifier carried in the offline management instruction or an identifier of the offline management instruction, and the target SD installation instruction comprises the decryption key corresponding to the decryption key identifier.

5. The management method according to any one of claims 2 to 4, wherein the second message and the fourth message each further comprise an attribute parameter of the decryption key, and the management method further comprises:
updating, by the terminal, association information based on the attribute parameter, wherein updated association information comprises a correspondence between the target SD and the decryption key.

6. The management method according to any one of claims 1 to 5, wherein the offline management instruction comprises application information, and after the obtaining, by a terminal, an application packet, the management method further comprises:
determining (S250), by the terminal based on the application information and TEE information, whether the offline management instruction needs to be executed, wherein the TEE information is application information corresponding to an application installed in a TEE module of the terminal.

7. A terminal, applied to management of a trusted execution environment TEE that supports an open trust protocol OTrP, wherein the terminal comprises:
an obtaining unit (601), configured to obtain an application packet, wherein the application packet comprises an offline management instruction, the offline management instruction comprises a target security domain SD identifier, a decryption key identifier, and encrypted data, a decryption key corresponding to the decryption key identifier is used to decrypt the encrypted data, the encrypted data is generated by an outside world entity OWE by using an encryption key, and the decryption key and the encryption key are a key pair generated by the outside world entity OWE; and
a processing unit (602), configured to determine whether a target SD corresponding to the target SD identifier comprises the decryption key corresponding to the decryption key identifier, wherein
when the target SD comprises the decryption key, the processing unit decrypts the encrypted data by using the decryption key, and performs an offline management operation based on data obtained after the encrypted data is decrypted;
wherein the encrypted data comprise a trusted application, TA, installation package or a TA update package; and
wherein the offline management instruction further comprises a key calculation parameter, and that the processing unit (602) decrypts the encrypted data by using the decryption key comprises:
the processing unit (602) calculates a session key by using the decryption key corresponding to the decryption key identifier and the key calculation parameter, and decrypts the encrypted data by using the session key.

8. The terminal according to claim 7, wherein the terminal further comprises a sending unit (603), a receiving unit (604), and a storage unit (605), wherein
the sending unit (603) is configured to: when the target SD does not comprise the decryption key, send a first message to the OWE, wherein the first message is used to obtain the decryption key corresponding to the decryption key identifier;
the receiving unit (604) is configured to receive a second message sent by the OWE in an online management mode by using the OTrP, wherein the second message comprises the decryption key; and
the processing unit (602) decrypts the encrypted data by using the decryption key, and performs an offline management operation based on data obtained after the encrypted data is decrypted.

9. The terminal according to claim 7 or 8 wherein
the processing unit (602) is further configured to determine, based on the target SD identifier, whether the terminal comprises the target SD corresponding to the target SD identifier;
wherein
the sending unit (603) is configured to: when the terminal does not comprise the target SD corresponding to the target SD identifier, send a third message to the OWE, wherein the third message comprises instruction information, the third message is used to request to install the target SD corresponding to the target SD identifier, and the instruction information is used to instruct to deploy, in the target SD that is requested to be installed, the decryption key corresponding to the decryption key identifier;
the receiving unit (604) is configured to receive a fourth message sent by the OWE in the online management mode by using the OTrP, wherein the fourth message comprises a target SD installation instruction, and the target SD installation instruction comprises the decryption key; and
the processing unit (602) is further configured to install, according to the target SD installation instruction, the target SD corresponding to the target SD identifier, and the storage unit (605) stores the decryption key in the installed target SD.
wherein the first message or the third message each comprise the decryption key identifier carried in the offline management instruction or an identifier of the offline management instruction, and the target SD installation instruction comprises the decryption key corresponding to the decryption key identifier.

10. The terminal according to any one of claims 7 to 9, wherein the second message and the fourth message each further comprise an attribute parameter of the decryption key; and
the processing unit (602) is further configured to update association information based on the attribute parameter, wherein updated association information comprises a correspondence between the target SD and the decryption key.

11. The terminal according to any one of claims 7 to 10, wherein the offline management instruction further comprises application information; and
the processing unit (602) is further configured to determine, based on the application information and TEE information, whether the offline management instruction needs to be executed, wherein the TEE information is application information corresponding to an application installed in a TEE module of the terminal.

12. The terminal according to claims 7 to 11, wherein
the sending unit (603) of the terminal is configured to send a fifth message to the OWE, wherein the fifth message is used by the OWE to configure a decryption key for at least one SD in the terminal;
the receiving unit (604) is configured to: receive a sixth message sent by the OWE in the online management mode by using the OTrP, wherein the sixth message comprises at least one decryption key and an attribute parameter of the decryption key, and generate association information based on the attribute parameter of the decryption key, wherein the association information comprises one or two of the following manners: there is a one-to-one correspondence between the at least one decryption key and the at least one SD, or there is a correspondence between each of the at least one decryption key and a plurality of SDs in the at least one SD; and
the storage unit (605) is configured to store the at least one decryption key and the association information.

13. A computer readable storage medium, comprising an instruction, wherein when the instruction is run on a device, the device is enabled to perform the method according to any one of claims 1 to 6.

## Patentansprüche

1. Verwaltungsverfahren, das auf die Verwaltung einer vertrauenswürdigen Ausführungsumgebung, TEE, angewendet wird, die ein "Open Trust Protocol", OTrP, unterstützt, wobei das Verwaltungsverfahren Folgendes umfasst:
Erlangen (S210) eines Anwendungspakets durch ein Endgerät, wobei das Anwendungspaket eine "Offline"-Verwaltungsanweisung umfasst, die "Offline"-Verwaltungsanweisung eine Ziel-Sicherheitsdomänenkennung, Ziel-SD-Kennung, eine Entschlüsselungsschlüsselkennung und verschlüsselte Daten umfasst, wobei ein Entschlüsselungsschlüssel, der der Entschlüsselungsschlüsselkennung entspricht, zum Entschlüsseln der verschlüsselten Daten verwendet wird, die verschlüsselten Daten von einer "Outside World Entity", OWE, durch Verwenden eines Verschlüsselungsschlüssels erzeugt werden und es sich bei dem Entschlüsselungsschlüssel und dem Verschlüsselungsschlüssel um ein Schlüsselpaar handelt, das von der "Outside World Entity", OWE, erzeugt wird, wobei das Endgerät zur Verwaltung der TEE angewendet wird;
Bestimmen (S220) durch das Endgerät, ob eine Ziel-SD, die der Ziel-SD-Kennung entspricht, den Entschlüsselungsschlüssel umfasst, der der Entschlüsselungsschlüsselkennung entspricht; und,
wenn die Ziel-SD den Entschlüsselungsschlüssel umfasst, Entschlüsseln der verschlüsselten Daten durch das Endgerät durch Verwenden des Entschlüsselungsschlüssels und Durchführen einer "Offline"-Verwaltungsoperation basierend auf Daten, die nach dem Entschlüsseln der verschlüsselten Daten erlangt werden;
wobei die verschlüsselten Daten ein Paket zur Installation einer vertrauenswürdigen Anwendung, TA, oder ein TA-Aktualisierungspaket umfassen; und
wobei die "Offline"-Verwaltungsanweisung ferner einen Schlüsselberechnungsparameter umfasst und das Entschlüsseln der verschlüsselten Daten durch das Endgerät durch Verwenden des Entschlüsselungsschlüssels Folgendes umfasst:
Berechnen eines Sitzungsschlüssels durch das Endgerät durch Verwenden des Entschlüsselungsschlüssels, der der Entschlüsselungsschlüsselkennung entspricht, und des Schlüsselberechnungsparameters und Entschlüsseln der verschlüsselten Daten durch Verwenden des Sitzungsschlüssels.

2. Verwaltungsverfahren nach Anspruch 1, wobei das Verwaltungsverfahren ferner Folgendes umfasst:
wenn die Ziel-SD den Entschlüsselungsschlüssel nicht umfasst, Senden (S241) einer ersten Nachricht durch das Endgerät an die OWE, wobei die erste Nachricht verwendet wird, um den Entschlüsselungsschlüssel zu erlangen, der der Entschlüsselungsschlüsselkennung entspricht;
Empfangen (S243) einer zweiten Nachricht durch das Endgerät, die von der OWE in einem "Online"-Verwaltungsmodus durch Verwenden des OTrP gesendet wird, wobei die zweite Nachricht den Entschlüsselungsschlüssel umfasst; und
Entschlüsseln der verschlüsselten Daten durch das Endgerät durch Verwenden des Entschlüsselungsschlüssels und Durchführen einer "Offline"-Verwaltungsoperation basierend auf Daten, die nach dem Entschlüsseln der verschlüsselten Daten erlangt werden.

3. Verwaltungsverfahren nach Anspruch 1 oder 2, wobei das Verwaltungsverfahren vor dem Bestimmen durch das Endgerät, ob die Ziel-SD, die der Ziel-SD-Kennung entspricht, den Entschlüsselungsschlüssel umfasst, der der Entschlüsselungsschlüsselkennung entspricht, ferner Folgendes umfasst:
Bestimmen (S260) durch das Endgerät basierend auf der Ziel-SD-Kennung, ob das Endgerät die Ziel-SD umfasst, die der Ziel-SD-Kennung entspricht.

4. Verwaltungsverfahren nach Anspruch 3, wobei das Verwaltungsverfahren ferner Folgendes umfasst:
wenn das Endgerät die Ziel-SD, die der Ziel-SD-Kennung entspricht, nicht umfasst, Senden einer dritten Nachricht durch das Endgerät an die OWE, wobei die dritte Nachricht Anweisungsinformationen umfasst, die dritte Nachricht verwendet wird, um die Installation der Ziel-SD anzufordern, die der Ziel-SD-Kennung entspricht, und die Anweisungsinformationen verwendet werden, um die Bereitstellung des Entschlüsselungsschlüssels, der der Entschlüsselungsschlüsselkennung entspricht, in der Ziel-SD anzuweisen, deren Installation angefordert wird;
Empfangen einer vierten Nachricht durch das Endgerät, die von der OWE in einem "Online"-Verwaltungsmodus durch Verwenden des OTrP gesendet wird, wobei die vierte Nachricht eine Ziel-SD-Installationsanweisung umfasst und die Ziel-SD-Installationsanweisung den Entschlüsselungsschlüssel umfasst; und
Installieren der Ziel-SD, die der Ziel-SD-Kennung entspricht, durch das Endgerät gemäß den Ziel-SD-Installationsanweisungen und Speichern des Entschlüsselungsschlüssels in der installierten Ziel-SD;
wobei die erste Nachricht und die dritte Nachricht jeweils die Entschlüsselungsschlüsselkennung, die in der "Offline"-Verwaltungsanweisung übertragen wird, oder eine Kennung der Offline-Verwaltungsanweisung umfassen und die Ziel-SD-Installationsanweisung den Entschlüsselungsschlüssel umfasst, der der Entschlüsselungsschlüsselkennung entspricht.

5. Verwaltungsverfahren nach einem der Ansprüche 2 bis 4, wobei die zweite Nachricht und die vierte Nachricht jeweils ferner einen Attributparameter des Entschlüsselungsschlüssels umfassen und das Verwaltungsverfahren ferner Folgendes umfasst:
Aktualisieren von Zuordnungsinformationen durch das Endgerät basierend auf dem Attributparameter, wobei die aktualisierten Zuordnungsinformationen eine Entsprechung zwischen der Ziel-SD und dem Entschlüsselungsschlüssel umfassen.

6. Verwaltungsverfahren nach einem der Ansprüche 1 bis 5, wobei die "Offline"-Verwaltungsanweisung Anwendungsinformationen umfasst und das Verwaltungsverfahren nach dem Erlangen eines Anwendungspakets durch ein Endgerät ferner Folgendes umfasst:
Bestimmen (S250) durch das Endgerät basierend auf den Anwendungsinformationen und den TEE-Informationen, ob die "Offline"-Verwaltungsanweisung ausgeführt werden muss, wobei die TEE-Informationen Anwendungsinformationen sind, die einer Anwendung entsprechen, die in einem TEE-Modul des Endgeräts installiert ist.

7. Endgerät, das zur Verwaltung einer vertrauenswürdigen Ausführungsumgebung, TEE, angewendet wird, die ein "Open Trust Protocol", OTrP, unterstützt, wobei das Endgerät Folgendes umfasst:
eine Erlangungseinheit (601), die dazu konfiguriert ist, ein Anwendungspaket zu erlangen, wobei das Anwendungspaket eine "Offline"-Verwaltungsanweisung umfasst, die "Offline"-Verwaltungsanweisung eine Ziel-Sicherheitsdomänenkennung, Ziel-SD-Kennung, eine Entschlüsselungsschlüsselkennung und verschlüsselte Daten umfasst, wobei ein Entschlüsselungsschlüssel, der der Entschlüsselungsschlüsselkennung entspricht, zum Entschlüsseln der verschlüsselten Daten verwendet wird, die verschlüsselten Daten von einer "Outside World Entity", OWE, durch Verwenden eines Verschlüsselungsschlüssels erzeugt werden und es sich bei dem Entschlüsselungsschlüssel und dem Verschlüsselungsschlüssel um ein Schlüsselpaar handelt, das von der "Outside World Entity", OWE, erzeugt wird; und
eine Verarbeitungseinheit (602), die dazu konfiguriert ist, zu bestimmen, ob eine Ziel-SD, die der Ziel-SD-Kennung entspricht, den Entschlüsselungsschlüssel umfasst, der der Entschlüsselungsschlüsselkennung entspricht; wobei,
wenn die Ziel-SD den Entschlüsselungsschlüssel umfasst, die Verarbeitungseinheit die verschlüsselten Daten durch Verwenden des Entschlüsselungsschlüssels entschlüsselt und eine "Offline"-Verwaltungsoperation basierend auf Daten durchführt, die nach dem Entschlüsseln der verschlüsselten Daten erlangt werden;
wobei die verschlüsselten Daten ein Paket zur Installation einer vertrauenswürdigen Anwendung, TA, oder ein TA-Aktualisierungspaket umfassen; und
wobei die "Offline"-Verwaltungsanweisung ferner einen Schlüsselberechnungsparameter umfasst und das Entschlüsseln der verschlüsselten Daten durch die Verarbeitungseinheit (602) durch Verwenden des Entschlüsselungsschlüssels Folgendes umfasst:
die Verarbeitungseinheit (602) berechnet einen Sitzungsschlüssel durch Verwenden des Entschlüsselungsschlüssels, der der Entschlüsselungsschlüsselkennung entspricht, und des Schlüsselberechnungsparameters und entschlüsselt die verschlüsselten Daten durch Verwenden des Sitzungsschlüssels.

8. Endgerät nach Anspruch 7, wobei das Endgerät ferner eine Sendeeinheit (603), eine Empfangseinheit (604) und eine Speichereinheit (605) umfasst, wobei
die Sendeeinheit (603) zu Folgendem konfiguriert ist; wenn die Ziel-SD den Entschlüsselungsschlüssel nicht umfasst, Senden einer ersten Nachricht an die OWE, wobei die erste Nachricht verwendet wird, um den Entschlüsselungsschlüssel zu erlangen, der der Entschlüsselungsschlüsselkennung entspricht;
die Empfangseinheit (604) dazu konfiguriert ist, eine zweite Nachricht zu empfangen, die von der OWE in einem "Online"-Verwaltungsmodus durch Verwenden des OTrP gesendet wird, wobei die zweite Nachricht den Entschlüsselungsschlüssel umfasst; und die Verarbeitungseinheit (602) die verschlüsselten Daten durch Verwenden des Entschlüsselungsschlüssels entschlüsselt und eine "Offline"-Verwaltungsoperation basierend auf Daten durchführt, die nach dem Entschlüsseln der verschlüsselten Daten erlangt werden.

9. Endgerät nach Anspruch 7 oder 8, wobei
die Verarbeitungseinheit (602) ferner dazu konfiguriert ist, basierend auf der Ziel-SD-Kennung zu bestimmen, ob das Endgerät die Ziel-SD umfasst, die der Ziel-SD-Kennung entspricht;
wobei
die Sendeeinheit (603) zu Folgendem konfiguriert ist: wenn das Endgerät die Ziel-SD, die der Ziel-SD-Kennung entspricht, nicht umfasst, Senden einer dritten Nachricht an die OWE, wobei die dritte Nachricht Anweisungsinformationen umfasst, die dritte Nachricht verwendet wird, um die Installation der Ziel-SD anzufordern, die der Ziel-SD-Kennung entspricht, und die Anweisungsinformationen verwendet werden, um die Bereitstellung des Entschlüsselungsschlüssels, der der Entschlüsselungsschlüsselkennung entspricht, in der Ziel-SD anzuweisen, deren Installation angefordert wird;
die Empfangseinheit (604) dazu konfiguriert ist, eine vierte Nachricht zu empfangen, die von der OWE in dem "Online"-Verwaltungsmodus durch Verwenden des OTrP gesendet wird, wobei die vierte Nachricht eine Ziel-SD-Installationsanweisung umfasst und die Ziel-SD-Installationsanweisung den Entschlüsselungsschlüssel umfasst; und
die Verarbeitungseinheit (602) ferner dazu konfiguriert ist, die Ziel-SD, die der Ziel-SD-Kennung entspricht, gemäß den Ziel-SD-Installationsanweisungen zu installieren, und die Speichereinheit (605) den Entschlüsselungsschlüssel in der installierten Ziel-SD speichert;
wobei die erste Nachricht oder die dritte Nachricht jeweils die Entschlüsselungsschlüsselkennung, die in der "Offline"-Verwaltungsanweisung übertragen wird, oder eine Kennung der Offline-Verwaltungsanweisung umfasst und die Ziel-SD-Installationsanweisung den Entschlüsselungsschlüssel umfasst, der der Entschlüsselungsschlüsselkennung entspricht.

10. Endgerät nach einem der Ansprüche 7 bis 9, wobei die zweite Nachricht und die vierte Nachricht jeweils ferner einen Attributparameter des Entschlüsselungsschlüssels umfassen; und
die Verarbeitungseinheit (602) ferner dazu konfiguriert ist, Zuordnungsinformationen basierend auf dem Attributparameter zu aktualisieren, wobei die aktualisierten Zuordnungsinformationen eine Entsprechung zwischen der Ziel-SD und dem Entschlüsselungsschlüssel umfassen.

11. Endgerät nach einem der Ansprüche 7 bis 10, wobei die "Offline"-Verwaltungsanweisung ferner Anwendungsinformationen umfasst; und
die Verarbeitungseinheit (602) ferner dazu konfiguriert ist, basierend auf den Anwendungsinformationen und den TEE-Informationen zu bestimmen, ob die Offline-Verwaltungsanweisung ausgeführt werden muss, wobei die TEE-Informationen Anwendungsinformationen sind, die einer Anwendung entsprechen, die in einem TEE-Modul des Endgeräts installiert ist.

12. Endgerät nach Anspruch 7 bis 11, wobei
die Sendeeinheit (603) des Endgeräts dazu konfiguriert ist, eine fünfte Nachricht an die OWE zu senden, wobei die fünfte Nachricht von der OWE zum Konfigurieren eines Entschlüsselungsschlüssels für mindestens eine SD in dem Endgerät verwendet wird;
die Empfangseinheit (604) zu Folgendem konfiguriert ist: Empfangen einer sechsten Nachricht, die von der OWE in dem "Online"-Verwaltungsmodus durch Verwenden des OTrP gesendet wird, wobei die sechste Nachricht mindestens einen Entschlüsselungsschlüssel und einen Attributparameter des Entschlüsselungsschlüssels umfasst, und Erzeugen von Zuordnungsinformationen basierend auf dem Attributparameter des Entschlüsselungsschlüssels, wobei die Zuordnungsinformationen eine oder zwei der folgenden Arten umfassen: es besteht eine Eins-zu-eins-Entsprechung zwischen dem mindestens einen Entschlüsselungsschlüssel und der mindestens einen SD oder es besteht eine Entsprechung zwischen jedem des mindestens einen Entschlüsselungsschlüssels und einer Mehrzahl von SDs in der mindestens einen SD; und
die Speichereinheit (605) dazu konfiguriert ist, den mindestens einen Entschlüsselungsschlüssel und die Zuordnungsinformationen zu speichern.

13. Computerlesbares Speichermedium, das eine Anweisung umfasst, wobei, wenn die Anweisung auf einer Vorrichtung ausgeführt wird, die Vorrichtung zum Durchführen des Verfahrens nach einem der Ansprüche 1 bis 6 in der Lage ist.

## Revendications

1. Procédé de gestion, appliqué à la gestion d'un environnement d'exécution de confiance, TEE, prenant en charge un protocole de confiance ouvert, OTrP, le procédé de gestion comprenant :
l'obtention (S210), par un terminal, d'un paquet d'application, le paquet d'application comprenant une instruction de gestion hors ligne, l'instruction de gestion hors ligne comprenant un identifiant de domaine de sécurité, SD, cible, un identifiant de clé de déchiffrement, et des données chiffrées, une clé de déchiffrement correspondant à l'identifiant de clé de déchiffrement étant utilisée pour déchiffrer les données chiffrées, les données chiffrées étant générées par une entité du monde extérieur, OWE, en utilisant une clé de chiffrement, et la clé de déchiffrement et la clé de chiffrement étant une paire de clés générée par l'entité du monde extérieur, OWE, le terminal étant appliqué à la gestion du TEE ;
la détermination (S220), par le terminal, du fait qu'un SD cible correspondant à l'identifiant de SD cible comprend ou non la clé de déchiffrement correspondant à l'identifiant de clé de déchiffrement ; et
lorsque le SD cible comprend la clé de déchiffrement, le déchiffrement, par le terminal, des données chiffrées en utilisant la clé de déchiffrement, et la réalisation d'une opération de gestion hors ligne basée sur les données obtenues après le déchiffrement des données chiffrées ;
les données chiffrées comprenant un paquet d'installation d'application de confiance, TA, ou un paquet de mise à jour de TA ; et
l'instruction de gestion hors ligne comprenant en outre un paramètre de calcul de clé, et le déchiffrement, par le terminal, des données chiffrées en utilisant la clé de déchiffrement comprenant :
le calcul, par le terminal, d'une clé de session en utilisant la clé de déchiffrement correspondant à l'identifiant de clé de déchiffrement et le paramètre de calcul de clé, et le déchiffrement des données chiffrées en utilisant la clé de session.

2. Procédé de gestion selon la revendication 1, le procédé de gestion comprenant en outre :
lorsque le SD cible ne comprend pas la clé de déchiffrement, l'envoi (S241), par le terminal, d'un premier message à l'OWE, le premier message étant utilisé pour obtenir la clé de déchiffrement correspondant à l'identifiant de clé de déchiffrement,
la réception (S243), par le terminal, d'un deuxième message envoyé par l'OWE dans un mode de gestion en ligne en utilisant l'OTrP, le deuxième message comprenant la clé de déchiffrement ; et
le déchiffrement, par le terminal, des données chiffrées en utilisant la clé de déchiffrement, et la réalisation d'une opération de gestion hors ligne basée sur les données obtenues après le déchiffrement des données chiffrées.

3. Procédé de gestion selon la revendication 1 ou 2, avant la détermination, par le terminal, du fait qu'un SD cible correspondant à l'identifiant de SD cible comprend ou non la clé de déchiffrement correspondant à l'identifiant de clé de déchiffrement, le procédé de gestion comprenant en outre :
la détermination (S260), par le terminal sur la base de l'identifiant de SD cible, du fait que le terminal comprend ou non le SD cible correspondant à l'identifiant de SD cible.

4. Procédé de gestion selon la revendication 3, le procédé de gestion comprenant en outre :
lorsque le terminal ne comprend pas le SD cible correspondant à l'identifiant de SD cible, l'envoi, par le terminal, d'un troisième message à l'OWE, le troisième message comprenant des informations d'instruction, le troisième message étant utilisé pour demander l'installation du SD cible correspondant à l'identifiant de SD cible, et les informations d'instruction étant utilisées pour donner l'instruction de déployer, dans le SD cible dont l'installation est demandée, la clé de déchiffrement correspondant à l'identifiant de clé de déchiffrement ;
la réception, par le terminal, d'un quatrième message envoyé par l'OWE dans le mode de gestion en ligne en utilisant l'OTrP, le quatrième message comprenant une instruction d'installation de SD cible, et l'instruction d'installation de SD cible comprenant la clé de déchiffrement ; et
l'installation, par le terminal selon l'instruction d'installation de SD cible, du SD cible correspondant à l'identifiant de SD cible, et le stockage de la clé de déchiffrement dans le SD cible installé ;
le premier message et le troisième message comprenant chacun l'identifiant de clé de déchiffrement transporté dans l'instruction de gestion hors ligne ou un identifiant de l'instruction de gestion hors ligne, et l'instruction d'installation de SD cible comprenant la clé de déchiffrement correspondant à l'identifiant de clé de déchiffrement.

5. Procédé de gestion selon l'une quelconque des revendications 2 à 4, le deuxième message et le quatrième message comprenant chacun en outre un paramètre d'attribut de la clé de déchiffrement, et le procédé de gestion comprenant en outre :
la mise à jour, par le terminal, d'informations d'association sur la base du paramètre d'attribut, les informations d'association mises à jour comprenant une correspondance entre le SD cible et la clé de déchiffrement.

6. Procédé de gestion selon l'une quelconque des revendications 1 à 5, l'instruction de gestion hors ligne comprenant des informations d'application, et après l'obtention, par un terminal, d'un paquet d'application, le procédé de gestion comprenant en outre :
la détermination (S250), par le terminal sur la base des informations d'application et des informations de TEE, du fait que l'instruction de gestion hors ligne doit être ou non exécutée, les informations de TEE étant des informations d'application correspondant à une application installée dans un module TEE du terminal.

7. Terminal, appliqué à la gestion d'un environnement d'exécution de confiance, TEE, prenant en charge un protocole de confiance ouvert, OTrP, le terminal comprenant :
une unité d'obtention (601), configurée pour obtenir un paquet d'application, le paquet d'application comprenant une instruction de gestion hors ligne, l'instruction de gestion hors ligne comprenant un identifiant de domaine de sécurité, SD, cible, un identifiant de clé de déchiffrement, et des données chiffrées, une clé de déchiffrement correspondant à l'identifiant de clé de déchiffrement étant utilisée pour déchiffrer les données chiffrées, les données chiffrées étant générées par une entité du monde extérieur, OWE, en utilisant une clé de chiffrement, et la clé de déchiffrement et la clé de chiffrement étant une paire de clés générée par l'entité du monde extérieur, OWE ; et
une unité de traitement (602), configurée pour déterminer si un SD cible correspondant à l'identifiant de SD cible comprend ou non la clé de déchiffrement correspondant à l'identifiant de clé de déchiffrement,
lorsque le SD cible comprend la clé de déchiffrement, l'unité de traitement déchiffrant les données chiffrées en utilisant la clé de déchiffrement, et effectuant une opération de gestion hors ligne basée sur les données obtenues après le déchiffrement des données chiffrées ;
les données chiffrées comprenant un paquet d'installation d'application de confiance, TA, ou un paquet de mise à jour de TA ; et
l'instruction de gestion hors ligne comprenant en outre un paramètre de calcul de clé, et le fait que l'unité de traitement (602) déchiffre les données chiffrées en utilisant la clé de déchiffrement comprenant :
le calcul, par l'unité de traitement (602), d'une clé de session en utilisant la clé de déchiffrement correspondant à l'identifiant de clé de déchiffrement et le paramètre de calcul de clé, et le déchiffrement, par l'unité de traitement (602), des données chiffrées en utilisant la clé de session.

8. Terminal selon la revendication 7, le terminal comprenant en outre une unité d'envoi (603), une unité de réception (604), et une unité de stockage (605),
l'unité d'envoi (603) étant configurée pour : lorsque le SD cible ne comprend pas la clé de déchiffrement, envoyer un premier message à l'OWE, le premier message étant utilisé pour obtenir la clé de déchiffrement correspondant à l'identifiant de clé de déchiffrement ;
l'unité de réception (604) étant configurée pour recevoir un deuxième message envoyé par l'OWE dans un mode de gestion en ligne en utilisant l'OTrP, le deuxième message comprenant la clé de déchiffrement ; et
l'unité de traitement (602) déchiffrant les données chiffrées en utilisant la clé de déchiffrement, et effectuant une opération de gestion hors ligne basée sur les données obtenues après le déchiffrement des données chiffrées.

9. Terminal selon la revendication 7 ou 8,
l'unité de traitement (602) étant en outre configurée pour déterminer, sur la base de l'identifiant de SD cible, si le terminal comprend ou non le SD cible correspondant à l'identifiant de SD cible ;
l'unité d'envoi (603) étant configurée pour : lorsque le terminal ne comprend pas le SD cible correspondant à l'identifiant de SD cible, envoyer un troisième message à l'OWE, le troisième message comprenant des informations d'instruction, le troisième message étant utilisé pour demander l'installation du SD cible correspondant à l'identifiant de SD cible, et les informations d'instruction étant utilisées pour donner l'instruction de déployer, dans le SD cible dont l'installation est demandée, la clé de déchiffrement correspondant à l'identifiant de clé de déchiffrement ;
l'unité de réception (604) étant configurée pour recevoir un quatrième message envoyé par l'OWE dans le mode de gestion en ligne en utilisant l'OTrP, le quatrième message comprenant une instruction d'installation de SD cible, et l'instruction d'installation de SD cible comprenant la clé de déchiffrement ; et
l'unité de traitement (602) étant en outre configurée pour installer, selon l'instruction d'installation de SD cible, le SD cible correspondant à l'identifiant de SD cible, et l'unité de stockage (605) stockant la clé de déchiffrement dans le SD cible installé ;
le premier message ou le troisième message comprenant chacun l'identifiant de clé de déchiffrement transporté dans l'instruction de gestion hors ligne ou un identifiant de l'instruction de gestion hors ligne, et l'instruction d'installation de SD cible comprenant la clé de déchiffrement correspondant à l'identifiant de clé de déchiffrement.

10. Terminal selon l'une quelconque des revendications 7 à 9, le deuxième message et le quatrième message comprenant chacun en outre un paramètre d'attribut de la clé de déchiffrement ; et
l'unité de traitement (602) étant en outre configurée pour mettre à jour des informations d'association sur la base du paramètre d'attribut, les informations d'association mises à jour comprenant une correspondance entre le SD cible et la clé de déchiffrement.

11. Terminal selon l'une quelconque des revendications 7 à 10, l'instruction de gestion hors ligne comprenant en outre des informations d'application ; et
l'unité de traitement (602) étant en outre configurée pour déterminer, sur la base des informations d'application et des informations de TEE, si l'instruction de gestion hors ligne doit être ou non exécutée, les informations de TEE étant des informations d'application correspondant à une application installée dans un module TEE du terminal.

12. Terminal selon les revendications 7 à 11,
l'unité d'envoi (603) du terminal étant configurée pour envoyer un cinquième message à l'OWE, le cinquième message étant utilisé par l'OWE pour configurer une clé de déchiffrement pour au moins un SD dans le terminal ;
l'unité de réception (604) étant configurée pour : recevoir un sixième message envoyé par l'OWE dans le mode de gestion en ligne en utilisant l'OTrP, le sixième message comprenant au moins une clé de déchiffrement et un paramètre d'attribut de la clé de déchiffrement, et générer des informations d'association basées sur le paramètre d'attribut de la clé de déchiffrement, les informations d'association comprenant l'une ou deux des manières suivantes : il existe une correspondance biunivoque entre l'au moins une clé de déchiffrement et l'au moins un SD, où il existe une correspondance entre chaque clé de déchiffrement de l'au moins une clé de déchiffrement et une pluralité de SD parmi l'au moins un SD ; et
l'unité de stockage (605) étant configurée pour stocker l'au moins une clé de déchiffrement et les informations d'association.

13. Support de stockage lisible par ordinateur, comprenant une instruction, lorsque l'instruction est exécutée sur un dispositif, le dispositif étant activé pour effectuer le procédé selon l'une quelconque des revendications 1 à 6.
